# EUROPEAN PATENT SPECIFICATION

(11) **EP 2 955 457 B1**
(45) Date of publication and mention of the grant of the patent: **26.04.2017**
(21) Application number: 13874786.0
(22) Date of filing: 19.12.2013
(51) Int. Cl.: F24F 11/02, H02J 3/00, H02P 27/06, H02P 6/20, H02P 6/24, F24F 11/00

(54) **POWER CONSUMPTION REDUCTION DEVICE**
VORRICHTUNG ZUR VERRINGERUNG DES ENERGIEVERBRAUCHS
DISPOSITIF DE RÉDUCTION DE CONSOMMATION D'ÉNERGIE

(30) Priority: 08.02.2013 JP 2013023463
(43) Date of publication of application: 16.12.2015
(73) Proprietor: Daikin Industries, Ltd., Osaka-shi, Osaka 530-8323 (JP)
(72) Inventor: SATO, Toshiaki, Osaka-shi, Osaka 530-8323 (JP); ITAGAKI, Tetsuya, Osaka-shi, Osaka 530-8323 (JP)
(74) Representative: Global IP Europe Patentanwaltskanzlei
(86) International application number: PCT/JP2013/084062
(87) International publication number: WO 2014/122864

(56) References cited:
- JP-A- 2001 268 918
- JP-A- 2001 268 918
- JP-A- 2003 018 842
- JP-A- 2003 222 417
- JP-A- 2003 222 417
- JP-A- 2012 007 743
- JP-A- 2012 007 743
- JP-A- 2012 241 916
- JP-A- 2012 241 916

## Description

### TECHNICAL FIELD

The present invention relates to an apparatus which reduces power consumption.

### BACKGROUND ART

An apparatus which is provided with a circuit where power is supplied from an external power source is in conventional widespread use. For example, there is a motor driving apparatus which drives a motor which is an actuator in an air conditioner as shown in Patent Document 1 (JP 2012-244869 A). The motor driving apparatus in Patent Document 1 is supplied with power from an external power source and performs vector control (field orientated control) for the motor. In Patent Document 1, control of driving of the motor is performed by adjusting a drive signal which is output from an inverter to the motor based on a motor current which flows through the motor due to driving of the motor.

JP 2012-241916A discloses a power consumption reducing apparatus which is provided in an indoor unit and/or an outdoor unit of an air conditioner, comprising: a main circuit configured to be electrically connected with an external power source to be supplied with power from the external power source, and including a main power source and a first direct current voltage generating section; an auxiliary circuit configured to be electrically connected with the external power source to be supplied with power from the external power source, and including an auxiliary power source; a first switch section connected in series with the main circuit between the external power source and the main circuit, and configured to be able to cut off the supply of power from the external power source to the main circuit; and a switch control section configured to be electrically connected with the auxiliary power source to be supplied with power from the auxiliary power source, and control switching of the first switch section, wherein, the main circuit is provided with a main circuit installation device configured to be operated by power which is supplied from the first direct current voltage generating section or the main power source, and the switch control section is configured to switch the first switch section so that power is supplied to the main circuit during an operation mode where the main circuit installation device is being operated and so that the supply of power to the main circuit is cut off during a standby mode where operation of the main circuit installation device is stopped.

### SUMMARY OF THE INVENTION

### <Technical Problem>

In the apparatus as described above, there is an apparatus where power is always being consumed due to power always being supplied from the external power source to the circuit. For example, in the motor driving apparatus described in Patent Document 1, it is assumed that power is supplied from the power source to the circuit and power is consumed even in a state where driving of the motor is stopped. In this case, an increase in power consumption is a concern.

Therefore, the problem of the present invention is to provide an apparatus which reduces power consumption.

### <Solution to Problem>

A power consumption reducing apparatus according to a first aspect of the present invention is provided with a main circuit, an auxiliary circuit, a first switch section, and a switch control section. The main circuit is electrically connected with an external power source and is supplied with power from the external power source. The main circuit includes a main power source. The auxiliary circuit is electrically connected with the external power source and is supplied with power from the external power source. The auxiliary circuit includes an auxiliary power source. The first switch section is connected in series with the main circuit between the external power source and the main circuit. The first switch section is configured and arranged to be able to cut off the supply of power from the external power source to the main circuit. The switch control section is electrically connected with the auxiliary power source, and is supplied with power from the auxiliary power source. The switch control section controls switching of the first switch section.

In the power consumption reducing apparatus according to the present invention, the first switch section is connected in series with the main circuit between the external power source and the main circuit and is configured and arranged to be able to cut off the supply of power from the external power source to the main circuit. The switch control section is supplied with power by being electrically connected with the auxiliary power source and controls switching of the first switch section. Due to this, according to the circumstances, it is possible to supply power only to the auxiliary circuit by cutting off the supply of power to the main circuit. Because of this, it is possible to supply power to the main circuit in a case where it is necessary for the main circuit to be supplied with power, and to cut off the supply of power to the main circuit in a case where it is not necessary for the main circuit to be supplied with power. As a result, power consumption in the main circuit is reduced in a case where it is not necessary for the main circuit to be supplied with power. Accordingly, it is possible to reduce power consumption.

A power consumption reducing apparatus according to the present invention where a main circuit installation device is provided in the main circuit. The main circuit installation device is operated by power which is supplied from the external power source or the main power source. The switch control section switches the first switch section so that power is supplied to the main circuit during an operation mode where the main circuit installation device is being operated and the supply of power to the main circuit is cut off during a standby mode where operation of the main circuit installation device is stopped.

In the power consumption reducing apparatus according to the present invention, the switch control section switches the first switch section so that power is supplied to the main circuit during the operation mode where the main circuit installation device is being operated and the supply of power to the main circuit is cut off during the standby mode where operation of the main circuit installation device is stopped. Due to this, power is supplied to the main circuit during the operation mode and the supply of power to the main circuit is cut off during the standby mode. As a result, power consumption in the main circuit is reduced during the standby mode.

A power consumption reducing apparatus according to another aspect of the present invention is the power consumption reducing apparatus according to the second aspect of the present invention where a second switch section is further provided. The second switch section is connected in series with the auxiliary circuit between the external power source and the auxiliary circuit. The second switch section is configured and arranged to be able to cut off the supply of power from the external power source to the auxiliary circuit. The switch control section is further electrically connected with the main power source and is supplied with power from the main power source. The switch control section switches the second switch section so that the supply of power to the auxiliary circuit is cut off during the operation mode and power is supplied to the auxiliary circuit during the standby mode.

In the power consumption reducing apparatus according to another aspect of the present invention, the switch control section is supplied with power by being electrically connected with the main power source and switches the second switch section so that the supply of power to the auxiliary circuit is cut off during the operation mode and power is supplied to the auxiliary circuit during the standby mode. Due to this, the supply of power to the main circuit is cut off during the standby mode and the supply of power to the auxiliary circuit is cut off during the operation mode. As a result, power consumption in the main circuit is reduced during the standby mode and power consumption in the auxiliary circuit is reduced during the operation mode. Accordingly, it is possible to further reduce power consumption.

A power consumption reducing apparatus according to another aspect of the present invention is the power consumption reducing apparatus according to the second aspect of the present invention where a second switch section is further provided. The second switch section is connected in series with the auxiliary circuit between the external power source and the auxiliary circuit. The second switch section is configured and arranged to be able to cut off the supply of power from the external power source to the auxiliary circuit. An auxiliary circuit installation device is provided in the auxiliary circuit. The auxiliary circuit installation device is operated by power which is supplied from the external power source via the second switch section or power which is supplied from the auxiliary power source. The auxiliary circuit installation device is electrically connected with the external power source via the first switch section or with the main power source. It is possible for the auxiliary circuit installation device to be supplied with power from the external power source via the first switch section or the main power source. The switch control section is further electrically connected with the main power source, and is supplied with power from the main power source. The switch control section switches the second switch section so that the supply of power to the auxiliary circuit is cut off during the operation mode and power is supplied to the auxiliary circuit during the standby mode. The auxiliary circuit installation device is supplied with power from the external power source via the first switch section or from the main power source during the operation mode. The auxiliary circuit installation device is supplied with power from the external power source via the second switch section or from the auxiliary power source during the standby mode.

In the power consumption reducing apparatus according to another aspect of the present invention, the switch control section switches the second switch section so that the supply of power to the auxiliary circuit is cut off during the operation mode and power is supplied to the auxiliary circuit during the standby mode. In addition, the auxiliary circuit installation device is supplied with power from the external power source via the first switch section or from the main power source during the operation mode and is supplied with power from the external power source via the second switch section or from the auxiliary power source during the standby mode. Due to this, power consumption in the main circuit is reduced during the standby mode and power consumption in the auxiliary circuit is reduced during the operation mode. Accordingly, it is possible to further reduce power consumption.

A power consumption reducing apparatus according to another of the present invention is the power consumption reducing apparatus according to any of the second aspect to the fourth aspect of the present invention where the standby mode state is realized when a predetermined time period elapses since operation of the main circuit installation device is stopped.

In the power consumption reducing apparatus according to another of the present invention, the standby mode state is realized when the predetermined time period elapses since operation of the main circuit installation device is stopped. Due to this, the supply of power is cut off only in a case where it is certain that the supply of power to the main circuit is to be cut off. As a result, it is possible to realize stable control of switching of the switch section.

A power consumption reducing apparatus according to another of the present invention is the power consumption reducing apparatus according to any of the second aspect to the fifth aspect of the present invention where the main circuit installation device is a device which is included in an air conditioner. The power consumption reducing apparatus is further provided with an integral control section. The integral control section integrally controls a plurality of devices which are included in the air conditioner. The switch control section is included in the integral control section.

In the power consumption reducing apparatus according to another of the present invention, the main circuit installation device is a device which is included in an air conditioner. Due to this, it is possible to reduce power consumption in the air conditioner.

A power consumption reducing apparatus according to the present invention where the main circuit installation device includes a voltage detecting section and a detection results utilizing section. The voltage detecting section detects a voltage which is supplied from the external power source. The detection results utilizing section is operated based on the detection results from the voltage detecting section.

In the power consumption reducing apparatus the main circuit installation device includes the voltage detecting section and the detection results utilizing section. Due to this, it is possible to reduce power consumption in an apparatus which includes the voltage detecting section and the detection results utilizing section.

A power consumption reducing apparatus according to the present invention where the main circuit installation device includes a voltage detecting section and a drive signal generating section. The voltage detecting section detects a voltage which is supplied from the external power source. The drive signal generating section generates a drive signal for driving an actuator based on the detection results from the voltage detecting section.

In the power consumption reducing apparatus according to the present invention, the main circuit installation device includes the voltage detecting section and the drive signal generating section. Due to this, it is possible to reduce power consumption of an apparatus which includes the voltage detecting section and the drive signal generating section.

A power consumption reducing apparatus according to the present invention where the actuator is a motor which is at least one drive source for a plurality of devices included in the air conditioner. The drive signal generating section includes a determining section and an output section. The determining section performs control to determine the drive signal using the detection results from the voltage detecting section. The output section generates the drive signal which is determined by the determining section and outputs the drive signal to the actuator.

In the power consumption reducing apparatus according to the present invention, the actuator is the motor which is at least one drive source for the plurality of devices included in the air conditioner. Due to this, it is possible to reduce power consumption for controlling the motor which is provided in the air conditioner.

### <Advantageous Effects of the Invention>

In the power consumption reducing apparatus according to the present invention, power consumption in the main circuit is reduced in a case where it is not necessary for the main circuit to be supplied with power. Accordingly, it is possible to reduce power consumption.

In the power consumption reducing apparatus according to the present invention, power consumption in the main circuit is reduced during the standby mode.

In the power consumption reducing apparatus according to another aspect of the present invention, power consumption in the auxiliary circuit is reduced during the operation mode. Accordingly, it is possible to further reduce power consumption.

In the power consumption reducing apparatus according to another aspect of the present invention, it is possible to realize stable control of switching of the switch section.

In the power consumption reducing apparatus according to another aspect of the present invention, it is possible to reduce power consumption in the air conditioner.

In the power consumption reducing apparatus according to the present invention, it is possible to reduce power consumption in an apparatus which includes the voltage detecting section and the detection results utilizing section.

In the power consumption reducing apparatus according to the present invention, it is possible to reduce power consumption of an apparatus which includes the voltage detecting section and the drive signal generating section.

In the power consumption reducing apparatus according to the present invention, it is possible to reduce power consumption for controlling the motor which is provided in the air conditioner.

### BRIEF DESCRIPTION OF THE DRAWINGS

[Fig. 1] Fig. 1 is an overall configuration diagram of a motor driving apparatus according to an embodiment of the present invention.
[Fig. 2] Fig. 2 is an overall configuration diagram of an air conditioner.
[Fig. 3] Fig. 3 is an overall configuration diagram of a voltage detecting section and a current detecting section.
[Fig. 4] Fig. 4 is a timing chart illustrating changes in the operations of each section in an air conditioner and the like.
[Fig. 5] Fig. 5 is an overall configuration diagram of a motor driving apparatus according to modified example 1H.
[Fig. 6] Fig. 6 is an overall configuration diagram of the motor driving apparatus according to modified example 1H.
[Fig. 7] Fig. 7 is an overall configuration diagram of a direct current power apparatus according to modified example 1M.

### DESCRIPTION OF EMBODIMENT

An embodiment of the present invention will be described below while referencing the diagrams. Here, the following embodiment is a specific example of the present embodiment and does not limit the technical scope of the appending claims and appropriate modifications are possible within the scope of the claims

### (1) Concept and Configuration of Air Conditioner 10

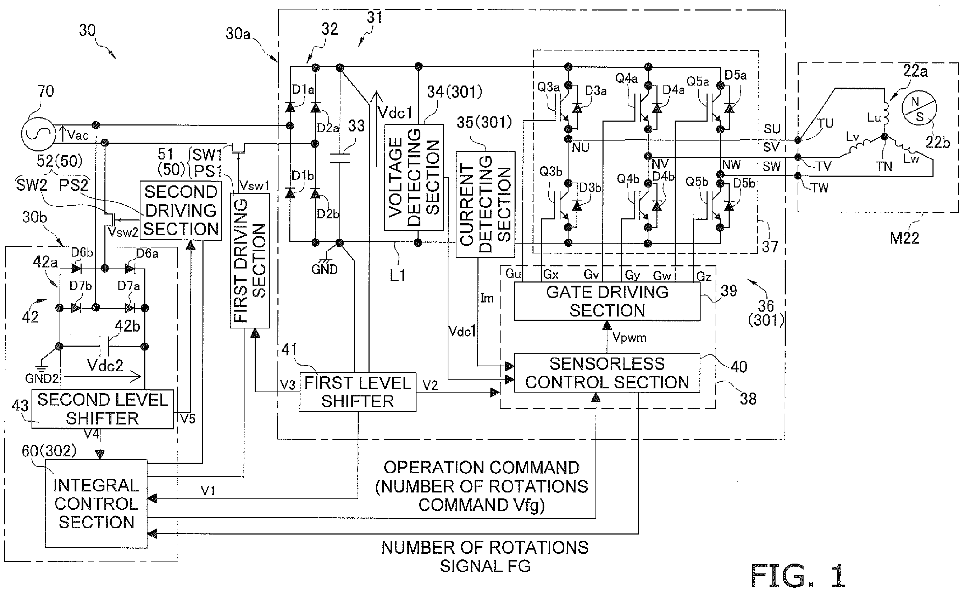

Fig. 1 is an overall configuration diagram of a motor driving apparatus 30. The configurations of an indoor fan motor M22 which is an actuator and the motor driving apparatus 30 according to the present embodiment for controlling of driving of the indoor fan motor M22 are illustrated in Fig. 1.

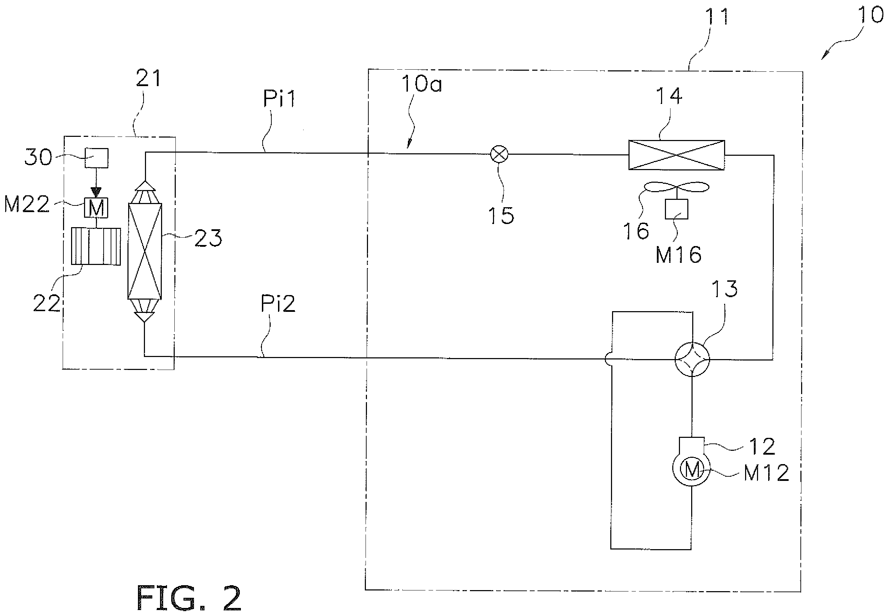

The indoor fan motor M22 is which is a fan motor, which is used as the drive source for an indoor fan 22 which is one of devices included in an indoor unit 21 of an air conditioner 10 (refer to Fig. 2). The indoor fan motor M22 is an alternating current motor which carries out driving by an alternating current voltage being applied.

The motor driving apparatus 30 is mounted inside the indoor unit 21.
The motor driving apparatus 30 is an apparatus which carries out vector control (that is, field orientated control of the alternating current motor) for the indoor fan motor M22 based on a motor current Im which is a current flowing through the indoor fan motor M22.

The configuration of the air conditioner 10 will be described below with reference to Fig. 2. Fig. 2 is an overall configuration diagram of the air conditioner 10.

The air conditioner 10 is a separator type of air conditioner which mainly has an outdoor unit 11 which is installed outdoors and the indoor unit 21 which is installed indoors such as on the ceiling or a wall surface. The outdoor unit 11 and the indoor unit 21 are connected using refrigerant piping Pi1 and Pi2, and a vapor compression type of refrigerant circuit 10a is configured in the air conditioner 10. Air cooling operations, air heating operations, and the like are possible in the air conditioner 10. The air conditioner 10 has control modes which include an operation mode and a stopping mode. The operation mode is selected in a case where the air conditioner 10 is being operated. The stopping mode is selected in a case where operation of the air conditioner 10 is stopped.

### (1-1) Outdoor Unit 11

The outdoor unit 11 mainly has a compressor 12, a four-way switching valve 13, an outdoor heat exchanger 14, an expansion valve 15, and an outdoor fan 16.

The compressor 12 is a mechanism which suctions in and compresses low-pressure gas refrigerant and discharges high-pressure gas refrigerant after compression. Here, a hermetic compressor is adopted as the compressor 12 such that a positive displacement compression element (which is not shown in the diagrams) such as a rotary type or a scrolling type, which is accommodated inside a casing (which is not shown in the diagrams), is driven with a compressor motor M12 which is accommodated in the same casing as the drive source. Due to this, it is possible to control the capacity of the compressor 12. That is, the compressor 12 is a compressor which is configured and arranged to be varied its capacity. The compressor motor M12 is a three-phase brushless DC motor and has a stator, a rotor, and the like.

The four-way switching valve 13 is a valve for switching the direction of the flow of refrigerant when switching between an air cooling operation and an air heating operation. During an air cooling operation, the four-way switching valve 13 connects the discharge side of the compressor 12 and the gas side of the outdoor heat exchanger 14 and connects the gas side of an indoor heat exchanger 23 which will be described later and the suction side of the compressor 12. In addition, during an air heating operation, the four-way switching valve 13 connects the discharge side of the compressor 12 and the gas side of the indoor heat exchanger 23 and connects the gas side of the outdoor heat exchanger 14 and the suction side of the compressor 12. That is, the connection state which is adopted by the four-way switching valve 13 changes according to the type of operation of the air conditioner 10.

The outdoor heat exchanger 14 is a heat exchanger which functions as a condenser for refrigerant during an air cooling operation and which functions as an evaporator for refrigerant during an air heating operation. The liquid side of the outdoor heat exchanger 14 is connected with the expansion valve 15 and the gas side of the outdoor heat exchanger 14 is connected with the four-way switching valve 13.

The expansion valve 15 is configured using an electric expansion valve. The expansion valve 15 reduces the pressure of high-pressure liquid refrigerant where heat is released in the outdoor heat exchanger 14 during an air cooling operation before the refrigerant is sent to the indoor heat exchanger 23. In addition, the expansion valve 15 reduces the pressure of high-pressure liquid refrigerant where heat is released in the indoor heat exchanger 23 during an air heating operation before the refrigerant is sent to the outdoor heat exchanger 14.

The outdoor fan 16 supplies outdoor air to the outdoor heat exchanger 14 by suctioning outdoor air into the outdoor unit 11 and exhausts the air to the outside of the outdoor unit 11. For example, a propeller fan is adopted as the outdoor fan 16 and is rotationally driven with an outdoor fan motor M16 as the drive source. The outdoor fan motor M16 is a three-phase brushless motor which has a stator and a rotor.

Other than this, the outdoor unit 11 has various sensors such as a refrigerant pressure sensor, a refrigerant temperature detecting sensor, and an outside temperature detecting sensor, and an outdoor unit control section (which is not shown in the diagrams) which controls each type of device inside the outdoor unit 11, and the like.

### (1-2) Indoor Unit 21

The indoor unit 21 mainly has the indoor fan 22 and the indoor heat exchanger 23. The indoor fan 22 and the indoor heat exchanger 23 are installed in a casing for the indoor unit 21.

The indoor fan 22 is a blower which takes in indoor air into the inside of the casing via an intake opening (which is not shown in the diagrams) and blows out the air from the inside of the casing to the indoors via a blowout opening (which is not shown in the diagrams) after heat exchange is carried out in the indoor heat exchanger 23. The indoor fan 22 is configured by, for example, a cross flow fan and is rotationally driven with the indoor fan motor M22 as the drive source. The indoor fan motor M22 is controlled to be driven by the motor driving apparatus 30.

Here, the indoor fan motor M22 will be described in detail using Fig. 1. The indoor fan motor M22 is configured by a three-phase brushless DC motor in the same manner as the other motors M12 and M16, and has a stator 22a and a rotor 22b.

The stator 22a includes drive coils Lu, Lv, and Lw for a U phase, a V phase, and a W phase with a star connection. One end of each of the drive coils Lu, Lv, and Lw is connected with drive coil terminals TU, TV, and TW for each of the wirings of the U phase, the V phase, and the W phase which each extend from an inverter 37 (which will be described later). The other end of each of the drive coils Lu, Lv, and Lw are connected with each other as a terminal TN. The three phases of the drive coils Lu, Lv, and Lw generate induction voltages according to the rotation speed and position of the rotor 22b when the rotor 22b rotates.

The rotor 22b includes permanent magnets with a plurality of poles which consist of a N pole and an S pole. The rotor 22b is rotated with regard to the stator 22a with a rotation shaft as the center. The rotation torque of the rotor 22b is transferred to the indoor fan 22 via an output shaft (which is not shown in the diagrams) which has the same shaft center as the rotation shaft. When focusing on the configuration of the rotor, the type of motor can be roughly divided into a surface permanent magnet motor (which is described below as an SPM motor) and an interior permanent magnet motor (which is described below as an IPM motor). In the following description, a case is assumed where the brushless DC motor which is used as the indoor fan motor M22 is mainly a typical SPM motor.

The indoor heat exchanger 23 is a heat exchanger which functions as an evaporator for refrigerant during an air cooling operation and which functions as a condenser for refrigerant during an air heating operation. The indoor heat exchanger 23 is connected with each of the refrigerant pipings Pi1 and Pi2. The indoor heat exchanger 23 is configured by, for example, a plurality of fins and a plurality of heat transfer pipes which are inserted in the fins. The indoor heat exchanger 23 performs heat exchange between air from indoors which is suctioned into the inside of the casing and refrigerant which flows through the heat transfer pipes.

Other than this, the indoor unit 21 has a horizontal flap which is provided at a blowout opening, various sensors such as a suction air temperature detecting sensor, an indoor unit control section which controls each type of device inside the indoor unit 21, and the like although these are not shown in the diagrams.

### (2) Configuration of Motor Driving Apparatus 30

The configuration of the motor driving apparatus 30 will be described below with reference to Fig. 1. The motor driving apparatus 30 is mounted on, for example, one print substrate. The motor driving apparatus 30 is mainly configured from a main circuit 30a, an auxiliary circuit 30b, a first switching section 51, and a second switching section 52 (the first switching section 51 and the second switching section 52 are described below in combination as a switching section 50).

A first direct current voltage generating section 31, a voltage detecting section 34, a current detecting section 35, a drive voltage generating section 36, and a first level shifter 41 (which is equivalent to a main power source) are provided in the main circuit 30a. Among these, the voltage detecting section 34, the current detecting section 35, and the drive voltage generating section 36 will be described as a main circuit installation device 301 which is a device which is provided in the main circuit 30a. The main circuit 30a is electrically connected with the indoor fan motor M22.

A second direct current voltage generating section 42, a second level shifter 43 (which is equivalent to an auxiliary power source), and an integral control section 60 are provided in the auxiliary circuit 30b. Among these, the integral control section 60 will be described as an auxiliary circuit installation device 302 which is a device which is provided in the auxiliary circuit 30b. The main circuit 30a and the auxiliary circuit 30b is electrically connected with a commercial power source 70 and, is supplied with power from a commercial power source 70. Here, the main circuit 30a, the auxiliary circuit 30b, and the commercial power source 70 are connected using, for example, a power source cord via a power plug in a house.

The first switching section 51 is connected in series with the main circuit 30a between the commercial power source 70 and the main circuit 30a. The second switching section 52 is connected in series with the auxiliary circuit 30b between the commercial power source 70 and the auxiliary circuit 30b. The integral control section 60 is electrically connected with the main circuit 30a, the auxiliary circuit 30b, and the switching section 50.

### (2-1) Main Circuit 30a

### (2-1-1) First Direct Current Voltage Generating Section 31

The first direct current voltage generating section 31 is for converting an alternating current voltage Vac which is input from the commercial power source 70 into a direct current voltage Vdc1. The first direct current voltage generating section 31 mainly has a rectifying section 32 and a smoothing capacitor 33.

The rectifying section 32 is configured in a bridge state using four diodes D1a, D1b, D2a, and D2b. In detail, the diodes D1a and D1b, or D2a and D2b are connected with each other in series. Each of the cathode terminals of the diodes D1a and D2a are connected with the plus side terminal of the smoothing capacitor 33 and function as positive side output terminals of the rectifying section 32.

Each of the anode terminals of the diodes D1b and D2b are connected with the minus side terminal of the smoothing capacitor 33 and function as negative side output terminals of the rectifying section 32. The connection point of the diodes D1a and D1b and the connection point of the diodes D2a and D2b are each connected with the commercial power source 70. That is, the connection point of the diodes D1a and D1b and the connection point of the diodes D2a and D2b carry out the role of inputting for the rectifying section 32.

The rectifying section 32 with this configuration rectifies the alternating current voltage Vac which is input from the commercial power source via a first switch SW1 (which will be described later) and supplies the voltage which is rectified to the smoothing capacitor 33.

One end of the smoothing capacitor 33 is connected with the positive side output terminal of the rectifying section 32 and the other end of the smoothing capacitor 33 is connected with the negative side output terminal of the rectifying section 32. The smoothing capacitor 33 smooths the voltage which is rectified by the rectifying section 32. The voltage which is smoothed is the direct current voltage Vdc1 with small ripples and is applied to the inverter 37 which is connected with a latter stage (that is, the output side) of the smoothing capacitor 33. The other end side of the capacitor is a reference potential (which is abbreviated as GND) for the main circuit 30a.

Here, as the type of capacitor, there are the examples of an electrolytic capacitor, a ceramic capacitor, a tantalum capacitor, and the like. In the present embodiment, an electrolytic capacitor is adopted as the smoothing capacitor 33.

### (2-1-2) Voltage Detecting Section 34

The voltage detecting section 34 is connected in parallel with the smoothing capacitor 33 at the output side of the smoothing capacitor 33. The voltage detecting section 34 detects the value of the direct current voltage Vdc1 which is a voltage at both ends of the smoothing capacitor 33, that is, a voltage which is supplied from the first direct current voltage generating section 31.

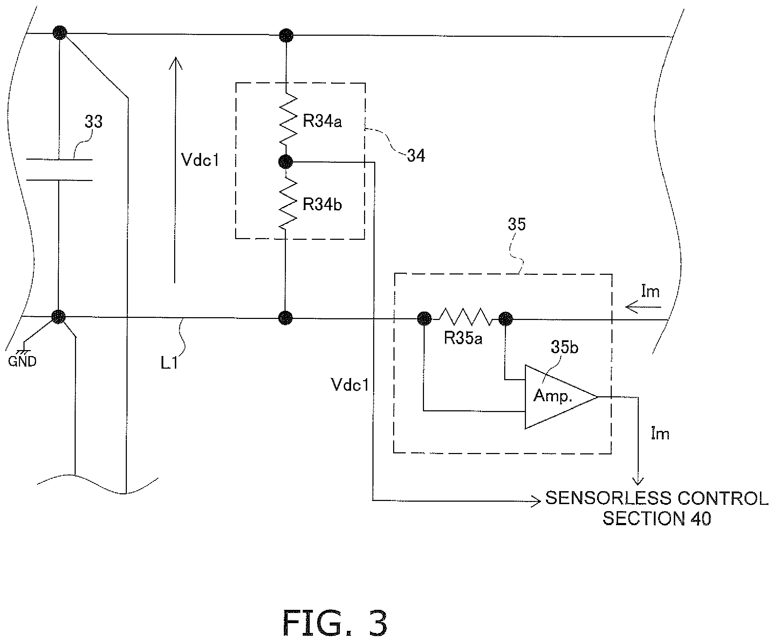

In particular, the voltage detecting section 34 according to the present embodiment has a configuration where two resistors R34a and R34b which are, for example, connected in series are connected in parallel with the smoothing capacitor 33 and divides the direct current voltage Vdc1 as shown in Fig. 3. The voltage value at the connection point of the two resistors R34a and R34b is input to a sensorless control section 40 (which will be described later) of the drive voltage generating section 36 as a value where a predetermined division ratio is applied to the direct current voltage Vdc1. Here, the predetermined division ratio is determined using resistance values of the resistors R34a and R34b which are directly connected with each other.

The voltage detecting section 34 with this configuration detects the value of the direct current voltage Vdc1 due to a current which accompanies the direct current voltage Vdc1 flowing through an inner section of the voltage detecting section 34 (in detail, the resistors R34a and R34b). Accordingly, the first direct current voltage generating section 31 according to the present embodiment is also referred to as a "current supplying section" which is for supplying a current to an inner section of the voltage detecting section 34. Due to the current flowing through each of the resistors, power is consumed in the voltage detecting section 34 even in a state where the motor M22 is not being driven.

### (2-1-3) Current Detecting Section 35

The current detecting section 35 is connected with the negative side (that is, output terminal side) of the smoothing capacitor 33 between the smoothing capacitor 33 and the inverter 37 in the drive voltage generating section 36 as shown in Fig. 1. The current detecting section 35 detects the motor current Im which flows through the indoor fan motor M22 after activation of the indoor fan motor M22. The current detecting section 35 is configured using, for example, a shunt resistor R35a and an amplifying circuit 35b as shown in Fig. 3.

The shunt resistor R35a is connected in series on GND wiring L1 which is connected with the negative side output terminal of the smoothing capacitor 33.

The amplifying circuit 35b is a circuit which consists of an operational amplifier for amplifying the voltage from both ends of the shunt resistor R35a by a predetermined magnification, or the like. The two inputs of the amplifying circuit 35b are connected with both ends of the shunt resistor R35a and the one output of the amplifying circuit 35b is connected with the sensorless control section 40.

Since a current which flows through the indoor fan motor M22 (that is, the motor current Im) flows through the GND wiring L1, it is possible for the current detecting section 35 to detect the motor current Im by detecting the voltage, which accompanies the motor current Im, from both ends of the shunt resistor R35a according to the state of conductance.

### (2-1-4) Drive Voltage Generating Section 36

The drive voltage generating section 36 generates drive voltages SU, SV, and SW (which are equivalent to drive signals), which are alternating current voltages for driving the indoor fan motor M22, based on the respective detection results (that is the direct current voltage Vdc1 and the motor current Im detected by the voltage detecting section 34 and the current detecting section 35) and the like. The drive voltage generating section 36 outputs the drive voltages SU, SV, and SW which are generated to the indoor fan motor M22. In particular, the drive voltage generating section 36 according to the present embodiment generates the drive voltages SU, SV, and SW based on a rotor position sensorless method using the value of the direct current voltage Vdc1 which is the detection results from the voltage detecting section 34 and the like.

The drive voltage generating section 36 is configured by the inverter 37 (which is equivalent to an output section) and an indoor fan control section 38 (which is equivalent to a determining section) as shown in Fig. 1.

### (2-1-5) inverter 37

The inverter 37 is connected with the output side of the smoothing capacitor 33. The inverter 37 includes a plurality of insulated gate bipolar transistors (simply referred to below as transistors) Q3a, Q3b, Q4a, Q4b, Q5a, and Q5b and a plurality of circulation diodes D3a, D3b, D4a, D4b, D5a, and D5b as shown in Fig. 1.

The transistors Q3a and Q3b, Q4a and Q4b, or Q5a and Q5b are each connected with each other in series. Each of the diodes D3a to D5b are connected in an antiparallel manner with regard to each of the transistors Q3a to Q5b by the collector terminals of the transistors being connected with the cathode terminals of the diodes and the emitter terminals of the transistors being connected with the anode terminals of the diodes.

The direct current voltage Vdc1 is applied from the smoothing capacitor 33 to the inverter 37. The inverter 37 generates the drive voltages SU, SV, and SW (which are equivalent to drive signals) which have a desired duty by ON and OFF of each of the transistors Q3a to Q5b being performed at timings which are the commands from a gate driving section 39 (which will be described later). The drive voltages SU, SV, and SW are output to the indoor fan motor M22 from the respective connection points NU, NV, or NW with each of the transistors Q3a and Q3b, Q4a and Q4b, or Q5a and Q5b. That is, the inverter 37 supplies power to the indoor fan motor M22.

### (2-1-6) Indoor Fan Control Section 38

The indoor fan control section 38 is a microcomputer which includes a RAM, a ROM, and a CPU and is connected with the inverter 37. The indoor fan control section 38 is a computer for controlling driving which is dedicated to the indoor fan motor M22. The indoor fan control section 38 performs control where the drive voltages SU, SV, and SW which the inverter 37 is to output to the indoor fan motor M22 are determined using the detection results from the voltage detecting section 34 and the like.

The indoor fan control section 38 mainly has the gate driving section 39 and the sensorless control section 40 as shown in Fig. 1.

### (2-1-6-1) Gate Driving Section 39

The gate driving section 39 changes the ON and OFF states of each of the transistors Q3a to Q5b in the inverter 37 based on a voltage command value Vpwm from the sensorless control section 40. In detail, the gate driving section 39 generates gate control voltages Gu, Gx, Gv, Gy, Gw, and Gz, which are applied to the gates of each of the transistors Q3a to Q5b, so that the drive voltages SU, SV, and SW, which have a duty which is determined by the sensorless control section 40, are output from the inverter 37 to the indoor fan motor M22. The gate control voltages Gu, Gx, Gv, Gy, Gw, and Gz generated by the gate driving section 39 are applied to the respective gate terminals of the transistors Q3a to Q5b.

Here, the voltage command value Vpwm is a command value for specifying parameters which relate to the drive voltages SU, SV, and SW. The voltage command value Vpwm is determined by being linked with the value of the direct current voltage Vdc1 and the value of the motor current Im which are respectively detected by the voltage detecting section 34 or the current detecting section 35 and the like, and is output from the sensorless control section 40. As the parameters which relate to the drive voltages SU, SV, and SW, there are the examples of the duties, the frequencies, the voltage values, and the like of the respective drive voltages SU, SV, and SW. In the present embodiment, the voltage command value Vpwm is a command value for specifying the duties of the drive voltages SU, SV, and SW, that is, PWM control of the indoor fan motor M22 is carried out.

### (2-1-6-2) Sensorless Control Section 40

The sensorless control section 40 is connected with the voltage detecting section 34, the current detecting section 35, the gate driving section 39, and the integral control section 60. The sensorless control section 40 is a functional section for carrying out drive control of the indoor fan motor M22 using a sensorless method (in more detail, a rotor position sensorless method).

In detail, the indoor fan motor M22 is firstly activated using a direct current excitation method or a forced driving method. The direct current excitation method is a method where the position of the rotor 22b in the indoor fan motor M22 is temporarily fixed at a predetermined position and driving of the indoor fan motor M22 starts from a state where the rotor 22b is fixed by performing conduction of a direct current with regard to the indoor fan motor M22 immediately before activation. In addition, the forced driving method is a method where the indoor fan motor M22 is forcibly activated by performing forced conduction where the drive voltages SU, SV, and SW which have certain voltage values and frequencies are applied to the indoor fan motor M22 irrespective of the position of the rotor 22b.

Then, the sensorless control section 40 estimates the position of the rotor 22b in the indoor fan motor M22 after activation, and estimates the number of rotations of the indoor fan motor M22 based on the position of the rotor 22b which is estimated. The number of rotations of the indoor fan motor M22 which is estimated is input into the integral control section 60 as a number of rotations signal FG.

Furthermore, when an operation command which includes a number of rotations command Vfg is sent from the integral control section 60, the sensorless control section 40 determines the duties of the drive voltage SU, SV, and SW as the voltage command value Vpwm at each of the control timings with the rotor position sensorless method using the operation command, the position of the rotor 22b which is estimated, the number of rotations which is estimated, the detection results from the voltage detecting section 34, and the detection results from the current detecting section 35.

Here, the rotor position sensorless method is a method with performing of estimating of the position of the rotor 22b, estimating of the number of rotations, PI control with regard to the number of rotations, PI control with regard to the motor current Im, and the like using various types of parameters which express the characteristics of the indoor fan motor M22, the direct current voltage Vdc1 (that is, the detection results from the voltage detecting section 34), the motor current Im (that is, the detection results from the current detecting section 35), a predetermined numerical model which relates to control of the indoor fan motor M22, and the like. As the various types of parameters which express the characteristics of the indoor fan motor M22, there are the examples of the coil resistance, the inductance component, the induced voltage, the number of poles, and the like of the indoor fan motor M22.

### (2-1-7) First Level Shifter 41 (Equivalent to Main Power Source)

The first level shifter 41 is connected in parallel with regard to the smoothing capacitor 33 as shown in Fig. 1 and a voltage (that is, the direct current voltage Vdc1) from both ends of the smoothing capacitor 33 is applied to the first level shifter 41. The output of the first level shifter 41 is connected with the indoor fan control section 38, the integral control section 60, and a first driving section PS1.

The first level shifter 41 converts the direct current voltage Vdc1 which is applied to three predetermined voltages V1, V2, and V3. The first level shifter 41 applies the predetermined voltages V1, V2, and V3 respectively to the indoor fan control section 38, the integral control section 60, or the first driving section PS1 as the power source voltages.

That is, the first level shifter 41 functions as the power source for the indoor fan control section 38, the integral control section 60, and the first driving section PS1. As one example, the first level shifter 41 converts the direct current voltage Vdc1 to the voltage V1 which is 3V and the voltages V2 and V3 which are 5V when the direct current voltage Vdc1 is 140V. The voltage V1 which is 3V is the power source voltage which is applied in order to operate the integral control section 60. The voltages V2 and V3 which are 5V are power source voltages which are applied in order to operate the indoor fan control section 38 or the first driving section PS1. Here, the first level shifter 41 may further convert the direct current voltage Vdc1 to a control power source voltage (for example, 15V) for controlling the inverter 37 in the same manner as described above.

### (2-2) Auxiliary Circuit 30b

### (2-2-1) Second Direct Current Voltage Generating Section 42

The second direct current voltage generating section 42 is for converting the alternating current voltage Vac which is input from the commercial power source 70 into a direct current voltage Vdc2. The second direct current voltage generating section 42 is configured in substantially the same manner as the first direct current voltage generating section 31 and mainly has a rectifying section 42a and a smoothing capacitor 42b.

The rectifying section 42a is configured in a bridge state using four diodes D6a, D6b, D7a, and D7b. Each of the cathode terminals of the diodes D6a and D7a are connected with the plus side terminal of the smoothing capacitor 42b and function as positive side output terminals of the rectifying section 42a. Each of the anode terminals of the diodes D6b and D7b are connected with the minus side terminal of the smoothing capacitor 42b and function as negative side output terminals of the rectifying section 42a.

The connection point of the diodes D6a and D6b and the connection point of the diodes D7a and D7b are each connected with the commercial power source 70. That is, the connection point of the diodes D6a and D6b and the connection point of the diodes D7a and D7b carry out the role of inputting for the rectifying section 42a.

The rectifying section 42a with this configuration rectifies the alternating current voltage Vac which is input from the commercial power source 70 and supplies the voltage which is rectified to the smoothing capacitor 42b.

One end of the smoothing capacitor 42b is connected with the positive side output terminal of the rectifying section 42a and the other end of the smoothing capacitor 42b is connected with the negative side output terminal of the rectifying section 42a. The smoothing capacitor 42b smooths the voltage which is rectified by the rectifying section 42a. The voltage which is smoothed is the direct current voltage Vdc2 with small ripples and is applied to the second level shifter 43 which is connected with a latter stage (that is, the output side) of the smoothing capacitor 42b. Here, the other end side of the capacitor is a reference potential GND2 for the auxiliary circuit 30b.

### (2-2-2) Second Level Shifter 43 (Equivalent to Auxiliary Power Source)

The second level shifter 43 is connected in parallel with regard to the smoothing capacitor 42b. The second level shifter 43 is applied a voltage (that is, the direct current voltage Vdc2) from both ends of the smoothing capacitor 42b. The output of the second level shifter 43 is connected with the integral control section 60 and a second driving section PS2.

The second level shifter 43 converts the direct current voltage Vdc2 which is applied to two predetermined voltages V4 and V5 where the values are different to each other. The second level shifter 43 applies the predetermined voltages V4 and V5 after conversion respectively to the integral control section 60 and the second driving section PS2 as power source voltages.

That is, the second level shifter 43 functions as the control power source for the integral control section 60 and the second driving section PS2. As one example, the second level shifter 43 converts the direct current voltage Vdc2 to the voltage V4 which is 3V and the voltage V5 which is 5V when the direct current voltage Vdc2 is 140V. The voltage V4 which is 3V is the power source voltage which is applied to the integral control section 60. The voltage V5 which is 5V is the power source voltage which is applied to the second driving section PS2.

### (2-2-3) Integral Control Section 60

The integral control section 60 (which is equivalent to an auxiliary circuit installation device) is a microcomputer which includes a RAM, a ROM, and a CPU. The integral control section 60 is supplied with the power source voltage from the first level shifter 41 and/or the second level shifter 43. Along with being connected with the indoor fan control section 38, the integral control section 60 is connected with a remote controller, an indoor unit control section, an outdoor unit control section, and the like although these are not shown in the diagrams.

The integral control section 60 integral controls a plurality of devices which are included in the air conditioner 10 (in detail, the compressor 12, the four-way switching valve 13, the outdoor fan 16, the indoor fan 22, and the like). For example, the integral control section 60 outputs an activation command for the compressor motor M12 or the outdoor fan motor M16 as a driving start command with regard to the outdoor unit control section in a case where there is a command to start operating from the remote controller.

In addition, the integral control section 60 outputs an activation command for the indoor fan motor M22 with regard to the indoor unit control section in a case where there is a command to start operating from the remote controller. Furthermore, the integral control section 60 performs monitoring of the number of rotations signal FG which indicates the number of rotations of the indoor fan motor M22 and outputs an operation command which includes the number of rotations command Vfg to the sensorless control section 40.

In addition, the integral control section 60 performs control of the switching section 50 which will be described later, but this will be described in detail later in "(2-4) Control of Switching Section 50 by Integral Control Section 60".

### (2-3) Switching Section 50

The first switching section 51 is for switching the flow of a current to the main circuit 30a. The first switching section 51 is connected in series with the main circuit 30a between the commercial power source 70 and the main circuit 30a as described above. In addition, the second switching section 52 is for switching the flow of a current to the auxiliary circuit 30b. The second switching section 52 is connected in series with the auxiliary circuit 30b between the commercial power source 70 and the auxiliary circuit 30b as described above. Since the switching section 50 is provided in this manner, it is possible to cut off the supply of power to the main circuit 30a and the auxiliary circuit 30b in the motor driving apparatus 30.

The first switching section 51 is mainly configured from the first switch SW1 and the first driving section PS1. The second switching section 52 is mainly configured from the second switch SW2 and the second driving section PS2. Here, in the following description, the first switch SW1 and the second switch SW2 are described in combination as a switch SW for convenience in the description. In addition, the first driving section PS1 and the second driving section PS2 are described in combination as a driving section PS.

### (2-3-1) Switch SW

The switch SW is an electrical component for preventing unnecessary consumption of power in the main circuit 30a and the auxiliary circuit 30b which have a configuration where a current flows if the alternating current voltage Vac is applied.

The switch SW is configured using, for example, a MOSFET (metal-oxide semiconductor field-effect transistor) which is one type of semiconductor switch, and carries out the role of a switch which switches between a current flowing and not flowing through the main circuit 30a and the auxiliary circuit 30b. The MOSFET is ON due to the potential of the gate terminal with regard to the potential of the source terminal being equal to or more than a threshold. For this reason, it is possible for the switch SW which is configured using a MOSFET to operate as a switch which switches between ON and OFF due to an appropriate voltage being applied to the gate terminal.

### (2-3-2) Driving Section PS

The driving section PS is configured using a plurality of transistors or the like.

The input of the first driving section PS1 is connected with the integral control section 60 and the first level shifter 41. In addition, the output of the first driving section PS1 is connected with the gate terminal of the first switch SW1. The first driving section PS1 is supplied with the predetermined voltage V3 from the first level shifter 41. The first driving section PS1 generates a switch drive power source Vsw1 for the first switch SW1 according to a command from the integral control section 60 and outputs the switch drive power source Vsw1 to the first switch SW1. That is, the operations of the first switch SW1 being turned ON and OFF is controlled by the integral control section 60.

In detail, the first driving section PS1 turns the first switch SW1 ON by supplying the switch drive power source Vsw1 which is, for example, 5V to the first switch SW1 so that there is a flow of current due to power being supplied from the commercial power source 70 to the main circuit 30a and the main circuit installation device 301. In addition, the first driving section PS1 turns the first switch SW1 OFF by interrupting the supply of the switch drive power source Vsw1 to the first switch SW1 so that there is no flow of current due to cutting off the supply of power to the main circuit 30a and the main circuit installation device 301.

The input of the second driving section PS2 is connected with the integral control section 60 and the second level shifter 43. The output of the second driving section PS2 is connected with the gate terminal of the second switch SW2. The second driving section PS2 is supplied with the predetermined voltage V5 from the second level shifter 43. The second driving section PS2 generates a switch drive power source Vsw2 (the switch drive power sources Vsw1 and Vsw2 are described below in combination as a switch drive power source Vsw) for the second switch SW2 according to a command from the integral control section 60 and outputs the switch drive power source Vsw2 to the second switch SW2. That is, the operations of the second switch SW2 being turned ON and OFF is controlled by the integral control section 60.

The second driving section PS2 turns the second switch SW2 ON by supplying the switch drive power source Vsw2 which is, for example, 5V to the second switch SW2 so that there is a flow of current due to power being supplied from the commercial power source 70 to the auxiliary circuit 30b and the auxiliary circuit installation device 302. In addition, the second driving section PS2 turns the second switch SW2 OFF by interrupting the supply of the switch drive power source Vsw2 to the second switch SW2 so that there is no flow of current due to cutting off the supply of power to the auxiliary circuit 30b and the auxiliary circuit installation device 302.

Here, at which timing is the switch SW switched from ON to OFF and from OFF to ON is described in detail in "(3) Operations of Switch SW and Indoor Fan Motor M22".

### (2-4) Control of Switching Section 50 by Integral Control Section 60

The integral control section 60 performs control of the switching section 50 by causing the driving section PS to supply and cut off the switch drive power source Vsw toward the switch SW.

In detail, the integral control section 60 controls so that the first switch SW1 is ON during the operation mode where the indoor fan motor M22 is being driven. Due to this, power is supplied to the main circuit 30a and the main circuit installation device 301 and current flows in the main circuit 30a and the main circuit installation device 301 during the operation mode. In addition, the integral control section 60 controls so that the first switch SW1 is OFF during the stopping mode where the indoor fan motor M22 is not being driven. Due to this, the supply of power to the main circuit 30a and the main circuit installation device 301 is cut off and current doesn't flows in the main circuit 30a and the main circuit installation device 301.

On the other hand, the integral control section 60 controls so that the second switch SW2 is OFF during the operation mode where the indoor fan motor M22 is being driven. Due to this, the supply of power to the auxiliary circuit 30b is cut off and current doesn't flows in the auxiliary circuit 30b during the operation mode. In addition, the integral control section 60 controls so that the second switch SW2 is ON during the stopping mode where the indoor fan motor M22 is not being driven. Due to this, power is supplied to the auxiliary circuit 30b and current flows in the auxiliary circuit 30b during the stopping mode.

Here, the integral control section 60 is supplied with power from the first level shifter 41 during the operation mode and is supplied with power from the second level shifter 43 during the stopping mode. In more detail, the integral control section 60 which is the auxiliary circuit installation device 302 is supplied with power from the first level shifter 41 during the operation mode (from the commercial power source 70 via the first switch SW1) and is supplied with power from the second level shifter 43 during the standby mode (from the commercial power source 70 via the second switch SW2). That is, the integral control section 60 is continuously supplied with power. Due to this, it is possible for the integral control section 60 any time to perform determining of transitioning between modes and control of switching of the switch SW.

In this manner, the integral control section 60 switches between the switch SW being ON or OFF depending on the operation mode or the stopping mode. Due to this, The supply of power to the main circuit 30a and the main circuit installation device 301 and the flow of current in the main circuit 30a and the main circuit installation device 301 are restrained during the stopping mode. Also, the supply of power to the auxiliary circuit 30b except for the auxiliary circuit installation device 302 (that is, the integral control section 60) and the flow of current in the auxiliary circuit 30b except for the auxiliary circuit installation device 302 (that is, the integral control section 60) are restrained during the operation mode. Due to this, it is possible to reduce power consumption in the main circuit installation device 301, especially the voltage detecting section 34, during the stopping mode.

### (3) Operations of Switch SW and Indoor Fan Motor M22

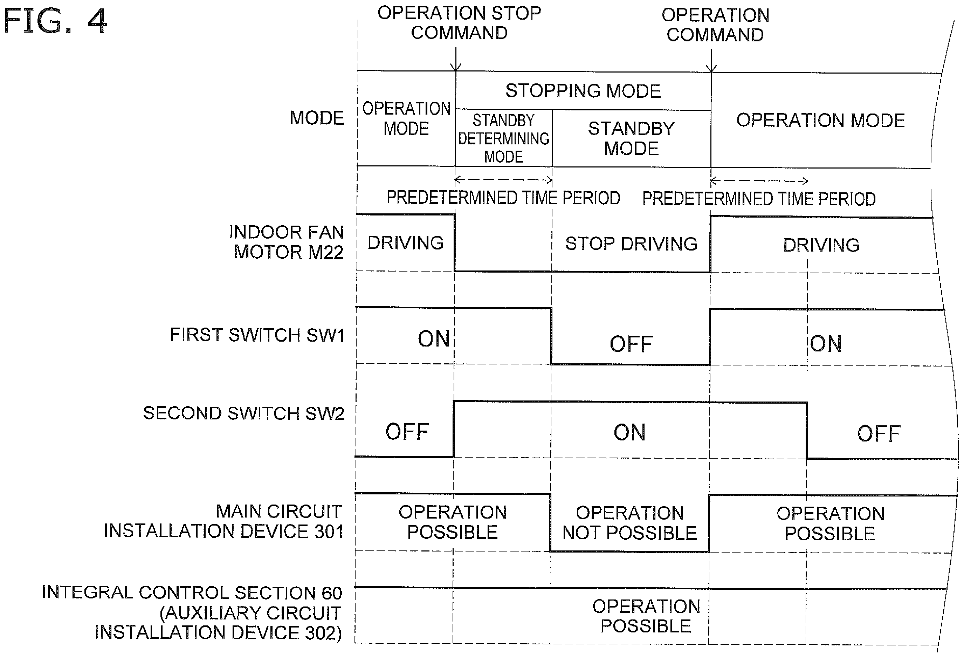

The timing of the switch SW being switched from ON to OFF, the timing of the switch SW being switched from OFF to ON, the operations of the indoor fan motor M22, and the like will be described below with reference to Fig. 4. Fig. 4 is a timing chart which represents how the state of the mode of the air conditioner 10, the state of driving of the indoor fan motor M22, the state which is adopted by the switch SW, and the state of operation of the main circuit installation device 301 and the integral control section 60 (the auxiliary circuit installation device 302) change as time elapses.

During the operation mode which is shown in Fig. 4, there is a state where the air conditioner 10 is being operated. When focusing on the indoor fan motor M22, in a case of the operation mode, the power source voltage V2 which is 5V is applied to the indoor fan control section 38 and the indoor fan control section 38 is in a state of controlling operation of the indoor fan motor M22. For this reason, the indoor fan motor M22 is driven.

In addition, there is a state where the first switch SW1 is ON due to the first switch drive power source Vsw1 being supplied from the first driving section PS1 and there is a state where a current flows in the main circuit 30a. Accordingly, the main circuit installation device 301 is in a state of being able to operate due to the supply of power. For example, the voltage detecting section 34 detects the value of voltages from both ends of the smoothing capacitor 33 (that is, the direct current voltage Vdc1) which is necessary in control of driving of the indoor fan motor M22. On the other hand, at this point in time, there is a state where the second switch SW2 is OFF. As such, the supply of power to the auxiliary circuit 30b is cut off and the supply of power to the integral control section 60 (the auxiliary circuit installation device 302) is performed from the first level shifter 41.

Next, the mode transitions from the operation mode to the stopping mode in a case where there is an operation stop command from a user via a remote controller or the like which is not shown in the diagrams. Here, the stopping mode has a standby determining mode and a standby mode as more detailed modes.

The standby determining mode is selected for a predetermined time period since the operation stop command. The standby determining mode is a mode for determining whether or not to transition to the standby mode. In other words, the standby determining mode is a mode for determining whether or not it is appropriate to cut off the supply of power to the main circuit 30a. On the other hand, the standby mode is a mode which conserves power consumption in the air conditioner 10 by stopping operation of the main circuit installation device 301 due to, for example, the supply of power from the commercial power source 70 to the main circuit 30a being cut off. Determining whether or not the predetermined time period elapses (that is, whether or not to transition from the standby determining mode to the standby mode) is performed by the integral control section 60. Here, it is possible for the predetermined time period to be appropriately set to an appropriate numerical value by taking into the consideration the actual design specifications and the installation environment of the product and the like.

First, operation of the indoor fan motor M22 is stopped and driving of the air conditioner 10 is stopped at a timing when there is an operation stop command and transition from the operation mode to the standby determining mode as the stopping mode. In addition, the integral control section 60 controls the second switching section 52 so that the second switch SW2 is turned ON. Due to this, power is supplied to the auxiliary circuit 30b, and the integral control section 60 (the auxiliary circuit installation device 302) is in a state of being able to operate even with the supply of power from the second level shifter 43.

Then, the integral control section 60 performs control of the first switching section 51 so that the first switch SW1 is switched from ON to OFF at a timing when the predetermined time period elapses since the operation stop command and there is transition from the standby determining mode to the standby mode. Due to this, the supply of power to the main circuit 30a is cut off and there is a state where it is not possible for the main circuit installation device 301 such as the voltage detection section 34 and the indoor fan control section 38 to be operated. That is, at this point in time, power is consumed in the auxiliary circuit 30b and the integral control section 60 which is the auxiliary circuit installation device 302 and power is not consumed in the main circuit installation device 301 and consumption of power due to the voltage detecting section 34, where power consumption is particularly large, is restrained.

Next, the mode transitions from the standby mode (stopping mode) to the operation mode when there is an operation command from the user while in the standby mode. At this timing, the integral control section 60 controls the first switching section 51 so that the first switch SW1 is turned ON. Due to this, power is supplied to the main circuit 30a and there is a state where the main circuit installation device 301 is able to operate. Then, the operation of activating the indoor fan motor M22 is started and operation of the air conditioner 10 is started.

In addition, when the predetermined time period elapses after transition to the operation mode, the integral control section 60 controls the second switching section 52 so that the second switch SW2 is turned OFF. Due to this, the supply of power to the auxiliary circuit 30b is cut off and the integral control section 60 (the auxiliary circuit installation device 302) supplies power only from the first level shifter 41. That is, at this point in time, power is consumed in the main circuit installation device 301 and power is not consumed in the auxiliary circuit 30b except for the auxiliary circuit installation devices 302. Here, the predetermined time period is, for example, a time period which is the same as the predetermined time period which is used in the standby determining mode and whether or not the time period elapses is determined by the integral control section 60.

### (4) Characteristics

### (4-1)

In the embodiment described above, the first switch SW1 is connected in series with the main circuit 30a between the commercial power source 70 and the main circuit 30a and is configured so as to be able to cut off the supply of power from the commercial power source 70 to the main circuit 30a. The integral control section 60 is supplied with power by being electrically connected with the second level shifter 43 and controls switching of the first switch SW1. Due to this, according to the circumstances, it is possible to supply power only to the auxiliary circuit 30b by cutting off the supply of power to the main circuit 30a. For this reason, it is possible to supply power to the main circuit 30a during the operation mode where it is necessary for power to be supplied to the main circuit 30a and to cut off the supply of power to the main circuit 30a during the standby mode where it is not necessary for power to be supplied to the main circuit 30a. As a result, power consumption in the main circuit 30a is reduced during the standby mode where it is not necessary for power to be supplied to the main circuit 30a. Accordingly, it is possible to reduce power consumption in the air conditioner 10.

### (4-2)

In the embodiment described above, the integral control section 60 switches the first switch SW1 so that power is supplied to the main circuit 30a during the operation mode where the main circuit installation device 301 is being operated and the supply of power to the main circuit 30a is cut off during the standby mode where operation of the main circuit installation device 301 is stopped. Due to this, power is supplied to the main circuit 30a during the operation mode and the supply of power to the main circuit 30a is cut off during the standby mode. As a result, power consumption in the main circuit 30a is reduced during the standby mode.

Here, to obtain only the effects of (4-1) and (4-2) described above, supply of power from the first level shifter 41 to the integral control section 60 is unnecessary and the second switching section 52 is also unnecessary.

### (4-3)

In the embodiment described above, the integral control section 60 is supplied with power by being electrically connected with the first level shifter 41 as well, and switches the second switch SW2 so that the supply of power to the auxiliary circuit 30b is cut off during the operation mode and power is supplied to the auxiliary circuit 30b during the standby mode. Due to this, the supply of power to the main circuit 30a is cut off during the standby mode and the supply of power to the auxiliary circuit 30b is cut off during the operation mode. As a result, power consumption in the main circuit 30a is reduced during the standby mode and power consumption in the auxiliary circuit 30b is reduced during the operation mode. Accordingly, it is possible to further reduce power consumption in the air conditioner 10.

### (4-4)

In the embodiment described above, the integral control section 60 switches the second switch SW2 so that the supply of power to the auxiliary circuit 30b is cut off during the operation mode and power is supplied to the auxiliary circuit 30b during the standby mode. In addition, the integral control section 60 which is the auxiliary circuit installation device 302 receives the supply of power from the first level shifter 41 (from the commercial power source 70 via the first switch SW1) during the operation mode, and receives the supply of power from the second level shifter 43 (from the commercial power source 70 via the second switch SW2) during the standby mode. Due to this, power consumption in the main circuit 30a is reduced during the standby mode and power consumption in the auxiliary circuit 30b is reduced during the operation mode. Accordingly, it is possible to reduce power consumption in the air conditioner 10.

### (4-5)

In the embodiment described above, there is a configuration where the standby mode state is realized when the predetermined time period elapses since operation of the main circuit installation device 301 is stopped. Due to this, the supply of power is cut off only in a case where it is certain that the supply of power to the main circuit 30a is to be cut off. As a result, it is possible to realize stable control of switching of the first switch SW1.

### (4-6)

In the embodiment described above, the main circuit installation device 301 is a device which is included in the air conditioner 10. Due to this, it is possible to reduce power consumption in the air conditioner 10.

### (4-7)

In the embodiment described above, the main circuit installation device 301 includes the voltage detecting section 34 and the indoor fan control section 38 which is the detection results utilizing section. Due to this, it is possible to reduce power consumption in the motor driving apparatus 30 which includes the voltage detecting section 34 and the indoor fan control section 38 as the detection results utilizing section.

### (4-8)

In the embodiment described above, the main circuit installation device 301 includes the voltage detecting section 34 and the drive voltage generating section 36 as the drive signal generating section. Due to this, it is possible to reduce power consumption in the motor driving apparatus 30 which includes the voltage detecting section 34 and the drive voltage generating section 36 as the drive signal generating section.

### (4-9)

In the embodiment described above, the actuator is the indoor fan motor M22 which is at least one drive source for the plurality of devices included in the air conditioner 10. Due to this, it is possible to reduce power consumption for controlling the indoor fan motor M22 which is provided in the air conditioner 10.

### (5) Modified Examples

### (5-1) Modified Example 1A

The embodiment described above is described as a case where the motor driving apparatus 30 is used as an apparatus for controlling driving of the indoor fan motor M22 which is the drive source for the indoor fan 22. However, the target for driving by the motor driving apparatus 30 is not limited to the indoor fan motor M22 and may be the outdoor fan motor M16, the compressor motor M12, or the expansion valve 15. In addition, the motor driving apparatus 30 may be used as the apparatus for driving a compressor motor, a pump motor, an outdoor fan motor, or the like which is included in a different heat pump apparatus such as a water heater instead of the air conditioner 10.

### (5-2) Modified Example 1 B

The embodiment described above is described as a case where the motor driving apparatus 30 controls driving of the indoor fan motor M22 using a rotor position sensorless method. However, it is sufficient if the motor driving apparatus 30 is an apparatus which is a type where control of the driving of the indoor fan motor M22 is performed using a value of a voltage (that is, the direct current voltage Vdc1) from both ends of the smoothing capacitor 33 when performing the driving of the indoor fan motor M22. Accordingly, the motor driving apparatus 30 is not limited to an apparatus which is a type which controls driving of the indoor fan motor M22 using a rotor position sensorless method, and the motor driving apparatus 30 can be applied to an apparatus which is a type where, for example, control is performed with regard to the indoor fan motor M22, which is mounted with a position detection sensor (for example, a hall element) which detects the position of the rotor 22b, based on detection results from the sensor.

In addition, in the same manner, instead of a brushless DC motor, the motor which is the target for driving by the motor driving apparatus 30 may be other types of motors such as an induction motor which is driven by an inverter.

### (5-3) Modified Example 1C

The embodiment described above is described as a case where the indoor fan motor M22 is a brushless DC motor and is, more specifically, a SPM motor. However, the type of brushless DC motor according to the present invention is not limited to a SPM motor.

### (5-4) Modified Example 1D

In the embodiment described above, it is configured so that power is supplied to the main circuit 30a and the auxiliary circuit 30b by being electrically connected with the commercial power source 70 via the switch SW, but it may be configured so that power is supplied to the main circuit 30a and the auxiliary circuit 30b by being electrically connected with a power source which is not the commercial power source via the switch SW.

### (5-5) Modified Example 1E

In the embodiment described above, the first level shifter 41 and the second level shifter 43 carry out the role of the main power source and the auxiliary power source by respectively carrying out level shifting of the direct current voltages Vdc1 and Vdc2, but the configuration of the main power source and the auxiliary power source is not limited to this.

In addition, in the embodiment described above, the first level shifter 41 is provided in the main circuit 30a at a latter stage than the first direct current voltage generating section 31, but the first level shifter 41 may be provided at an earlier stage than the first direct current voltage generating section 31. That is, the main power source may be provided independently to the main circuit 30a. In addition, in a circuit in the embodiment described above, a power source may be created by connecting the main power source with the alternating current voltage Vac.

In addition, in the same manner as this, the second level shifter 43 is provided in the auxiliary circuit 30b at a latter stage than the second direct current voltage generating section 42, but the second level shifter 43 may be provided at an earlier stage than the second direct current voltage generating section 42 in a case of another device which uses the direct current voltage Vdc2. That is, the auxiliary power source may be provided independently to the auxiliary circuit 30b. In addition, in a circuit in the embodiment described above, a power source may be created by connecting the auxiliary power source with the alternating current voltage Vac.

### (5-6) Modified Example 1F

The embodiment described above is described as a case where the inverter 37, which is a so-called voltage inverter which controls a voltage as the control target by setting of the voltage setting value Vpwm is provided in the main circuit 30a. However, a chopper or matrix converter which performs control of driving of an actuator based on the detection results from the voltage detecting section 34 may be provided in the main circuit 30a instead of the inverter 37.

### (5-7) Modified Example 1G

The embodiment described above is described as a case where the detection target of the voltage detecting section 34 is the value of the direct current voltage Vdc1. However, it is sufficient if the detection target of the voltage detecting section 34 is information which indicates voltage characteristics. Accordingly, the detection target of the voltage detecting section 34 need not be a direct current voltage and may be an alternating current voltage. In this case, the voltage detecting section 34 is provided, for example, between the first switch SW1 and the first direct current voltage generating section 31 and detects the alternating current voltage Vac from the commercial power source 70. By estimating the direct current voltage Vdc1 from the detected value, it is possible for the motor driving apparatus 30 to perform control in the same manner as described above.

In addition, the voltage detecting section 34 need not detect the value of a voltage and may detect voltage characteristics such as the phase, zero crossing point, or polarity of a voltage. In this case, by estimating the voltage value from the voltage characteristics which are detected, it is possible for the motor driving apparatus 30 to perform control in the same manner as described above. Alternatively, it is possible to also apply this to applications, where control is performed directly using voltage characteristics such as the phase, zero crossing point, or polarity of a voltage, such as a motor where phase control is performed.

### (5-8) Modified Example 1H

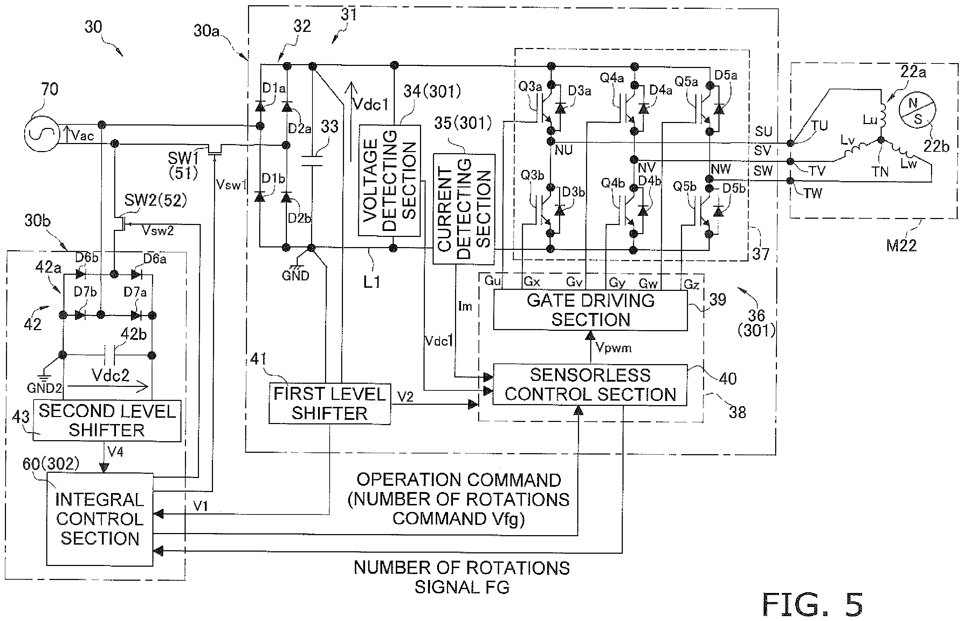

The embodiment described above is described as a case where the switching section 50 has the switch SW and the driving section PS as shown in Fig. 1. However, the first switching section 51 and the second switching section 52 may only have the switch SW without having the driving section PS as shown in Fig. 5. In the embodiment which is shown in Fig. 5, the gate terminal of the switch SW and the integral control section 60 are connected and a switch control signal which is sent by the integral control section 60 is applied as the switch drive power source Vsw, thereby the switch SW is switched between ON and OFF.

In addition, the switch SW may be switched between ON and OFF according to the state of the switch control signal which is sent from the integral control section 60 without the switch SW being switched between ON and OFF according to the supply or cutting off the switch drive power source Vsw even if the switching section 50 has the driving section PS.

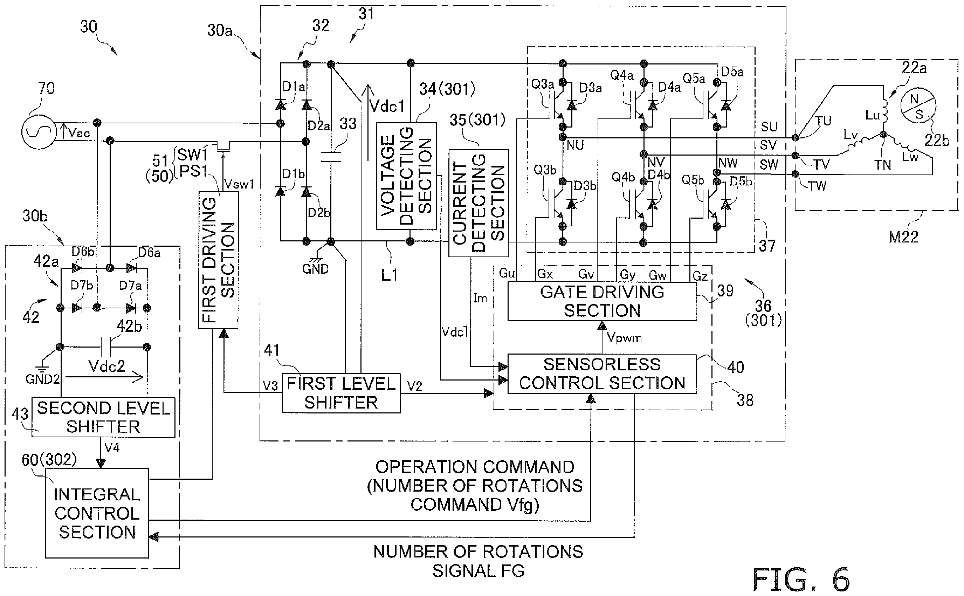

In addition, in the embodiment described above, the switching section 50 is mainly configured from the first switching section 51 and the second switching section 52, but the second switching section 52 may be appropriately omitted as shown in Fig. 6. In this case, since the integral control section 60 is always supplied with the power source voltage V4 from the second level shifter 43, the supply of the power source voltage V1 from the first level shifter is not necessary. As such, the integral control section 60 is not connected with the first level shifter 41. It is possible to supply power to the main circuit 30a during the operation mode where the main circuit installation device 301 is being operated and to cut off the supply of power to the main circuit 30a during the standby mode where operation of the main circuit installation device 301 is stopped even in this embodiment which is shown in Fig. 6. As a result, power consumption in the main circuit 30a is reduced during the standby mode and it is possible to reduce power consumption in the air conditioner 10.

### (5-9) Modified Example 1I

The embodiment described above is described as a case where the switch SW is configured by a MOSFET. However, the configuration of the switch SW according to the present invention is not limited to a MOSFET. For example, the switch SW may be an electromagnetic relay or another type of semiconductor switch such as an insulated gate bipolar transistor (IGBT) or a solid state relay.

### (5-10) Modified Example 1J

The embodiment described above is described with the integral control section 60 as the auxiliary circuit installation device 302 but is not limited to this. For example, the integral control section 60 may be the main circuit installation device 301 which is a device provided in the main circuit 30a. In addition, the integral control section 60 may be provided as an independent device which is not the auxiliary circuit installation device 302.

In addition, the embodiment described above is described as a case where control of switching of the switch SW is carried out by the integral control section 60. However, without being limited to this, a switch control section may be newly provided instead of the integral control section 60 and the integral control section 60 may be provided in the main circuit 30a as the main circuit installation device 301. In this case, the integral control section 60 performs integral control of the main circuit installation device 301 by receiving the supply of the power source voltage V1 only from the first level shifter 41. On the other hand, the switch control section performs control of switching of the switch SW by receiving the supply of the power source voltage from the first level shifter 41 and/or the second level shifter 43. Here, it is sufficient if the timing when the switch control section performs switching of the switch SW is configured in the same manner as the timing which is shown in Fig. 4.

### (5-11) Modified Example 1K

The embodiment described above is described as a case where the mode transitions from the standby determining mode to the standby mode after the predetermined time period elapses in a case where an operation stop command is given as shown in Fig. 4. However, without being limited to this, the standby determining mode may be omitted. That is, the mode may directly transition from the operation mode to the standby mode and the switch SW may be switched from ON to OFF at a timing when an operation stop command is given.

In addition, the embodiment described above is described as a case where the second switch SW2 is switched from ON to OFF after the predetermined time period elapses in a case where a driving command is given. However, without being limited to this, the second switch SW2 may be switched from ON to OFF at a timing when a driving command is given.

### (5-12) Modified Example 1L

In the embodiment described above, whether or not supply of power to the outdoor unit 11 is cut off during the standby mode is not referred to, but it is obvious that supply of power from the commercial power source 70 to the outdoor unit 11 may be cut off by a main power source relay (which is not shown in the diagrams) between the outdoor unit 11 and the commercial power source 70 which is the drive power source for the outdoor unit 11 being turned OFF during the standby mode. Due to this, it is possible to reduce the power which is consumed in the outdoor unit 11 during the standby mode.

### (5-13) Modified Example 1M

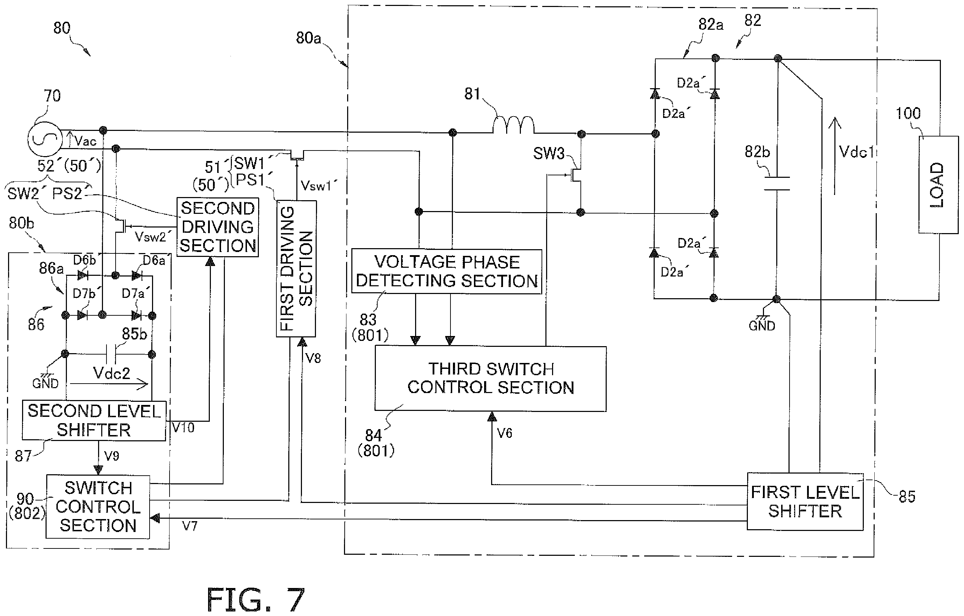

In the embodiment described above, the power consumption reducing apparatus according to the present invention is applied to the motor driving apparatus 30 which is an actuator driving apparatus, but it is possible to also apply the power consumption reducing apparatus to an apparatus which is not an actuator driving apparatus. That is, it is possible to apply the power consumption reducing apparatus according to the present invention to an apparatus which has a circuit where power is supplied from an external power source. It is possible to also apply the power consumption reducing apparatus to, for example, a direct current power apparatus 80 where power is always consumed due to the phase of the power source voltage which is supplied from the commercial power source 70 being always detected as shown in Fig. 7. The direct current power apparatus 80 which is shown in Fig. 7 will be described below.

The direct current power apparatus 80 is an apparatus which converts the alternating current voltage Vac which is supplied from the commercial power source 70 to the direct current voltage Vdc1. The direct current power apparatus 80 is mainly configured from a main circuit 80a, an auxiliary circuit 80b, a switch control section 90, a first switching section 51', and a second switching section 52' (the first switching section 51' and the second switching section 52' are described below in combination as a switching section 50'). The direct current power apparatus 80 is electrically connected with the commercial power source 70 and a load 100. Here, description of the first switching section 51' and the second switching section 52' is omitted because the first switching section 51' and the second switching section 52' have the same configuration as the first switching section 51 and the second switching section 52. In addition, in the following description, a first switch SW1' and a second switch SW2' are described in combination as a switch SW', and a first driving section PS1' and a second driving section PS2' are described in combination as a driving section PS' for convenience in the description.

A reactor 81, a third switch SW3, a first direct current voltage generating section 82, a voltage phase detecting section 83, a third switch control section 84, and a first level shifter 85 (which is equivalent to a main power source) are provided in the main circuit 80a. Among these, the voltage phase detecting section 83 and the third switch control section 84 will be described as a main circuit installation device 801 which is a device provided in the main circuit 80a. Here, description of the first direct current voltage generating section 82 is omitted because the first direct current voltage generating section 82 has the same configuration as the first direct current voltage generating section 31.

The reactor 81 is connected between the commercial power source 70 and the alternating current input terminal of the first direct current voltage generating section 82. The third switch SW3 is a switch for short circuiting the commercial power source 70 and is represented in Fig. 7 using a single element but in practice, the third switch SW3 is often configured by, for example, a combination of a diode bridge and a semiconductor element such as a MOSFET or an IGBT in order for current to flow in both directions. The first direct current voltage generating section 82 rectifies a current which flows due to the alternating current voltage Vac from the commercial power source 70 by short-circuit and opening operations of the third switch SW3. The first direct current voltage generating section 82 supplies the current to the load.

The voltage phase detecting section 83 is connected with both ends of the commercial power source 70 and detects the phase of the voltage from the commercial power source 70. In more detail, the voltage phase detecting section 83 is mainly configured from a photo coupler, a resistor, and a diode (which are not shown in the diagrams). The primary side of the photo coupler is connected with the commercial power source 70 via the diode, and the photo coupler is arranged so that the photo coupler turns ON only during either a positive or negative half cycle period in the commercial power source 70. The secondary side of the photo coupler is connected with the input port of the third switch control section 84 which is a microcomputer due to pull up of the collector of an output transistor being carried out using the resistor. There is a flow of current and power is consumed in the voltage phase detecting section 83 even in a case where power is not consumed in the load which utilizes the detection result in the same manner as the voltage detecting section 34 of the motor driving apparatus 30.

The third switch control section 84 estimates the true zero crossing point of the commercial power source 70 on the basis of the output pulse signal from the voltage phase detecting section 83. In addition, the third switch control section 84 repeats short circuiting and opening of the third switch SW3, for example, once per half cycle of the power source by generating a drive signal which drives the third switch SW3 after the timing is corrected with regard to the pulse signal which is output from the voltage phase detecting section 83.

Regarding the short circuiting and opening operation of the third switch SW3, the third switch control section 84 controls the third switch SW3 so as to be short circuited after a predetermined time period from the true zero crossing point of the commercial power source 70 and so as to be open after a predetermined time period after this. That is, the direct current power apparatus 80 restrains variation due to the photo coupler which is a main cause for variation in detection of the phase of a voltage from an alternating current power source by correcting the timing with which the third switch SW3 is short circuited or opened being corrected according to the pulse width of the voltage phase detection signal which is output from the voltage phase detecting section 83. That is, the direct current power apparatus 80 restrains variation in the power factor.

The first level shifter 85 is connected in parallel with a smoothing capacitor 82b and a voltage (that is, the direct current voltage Vdc1) on both ends of the smoothing capacitor 82b is applied to the first level shifter 85. The output of the first level shifter 85 is connected with the third switch control section 84, the switch control section 90, and the first driving section PS1'.

The first level shifter 85 converts the direct current voltage Vdc1 which is applied to three predetermined voltages V6, V7, and V8. The first level shifter 85 respectively applies the predetermined voltages V6, V7, and V8 to the third switch control section 84, the switch control section 90, or the first driving section PS1' as the power source voltages.

That is, the first level shifter 85 functions as the power source for the third switch control section 84, the switch control section 90, and the first driving section PS1'. As one example, the first level shifter 85 converts the direct current voltage Vdc1 as 140V to the voltages V6 and V7 which are 3V and the voltage V8 which is 5V. The voltages V6 and V7 which are 3V are the power source voltages which are applied to the third switch control section 84 or the switch control section 90. The voltage V8 which is 5V is the power source voltage which is applied to the first driving section PS1'.

It is assumed that the load 100 is an inverter circuit, a motor, or the like, but the load 100 is not limited to this and appropriate selections are possible.

A second direct current voltage generating section 86, a second level shifter 87 (which is equivalent to an auxiliary power source), and the switch control section 90 are mainly provided in the auxiliary circuit 80b. Here, in the embodiment which is shown in Fig. 7, the switch control section 90 will be described as an auxiliary circuit installation device 802 which is a device provided in the auxiliary circuit. Here, description of the second direct current voltage generating section 86 is omitted because the second direct current voltage generating section 86 having the same configuration as the second direct current voltage generating section 42.

The second level shifter 87 is connected in parallel with a smoothing capacitor 85b and a voltage (that is, the direct current voltage Vdc2) from both ends of the smoothing capacitor 85b is applied to the second level shifter 87. The output of the second level shifter 87 is connected with the switch control section 90 and the second driving section PS2'.

The second level shifter 87 converts the direct current voltage Vdc2 which is applied to two predetermined voltages V9 and V10 where the values are different to each other. The second level shifter 87 respectively applies the predetermined voltages V9 and V10 after conversion to the switch control section 90 or the second driving section PS2' as the power source voltages. That is, the second level shifter 87 functions as the power source for the switch control section 90 and the second driving section PS2'. As one example, the second level shifter 87 converts the direct current voltage Vdc2 as 140V to the voltage V9 which is 3V and the voltage V10 which is 5V. The voltage V9 which is 3V is the power source voltage which is applied to the switch control section 90. The voltage V10 which is 5V is the power source voltage which is applied to the second driving section PS2'.

The switch control section 90 is a microcomputer which consists of a RAM, a ROM, and a CPU. The switch control section 90 is supplied with the power source voltage from the first level shifter 85 and/or the second level shifter 87. Along with being connected with the switching section 50', the switch control section 90 is connected with a remote controller or the like which is not shown in the diagrams. In addition, the switch control section 90 performs control of the switching section 50' by causing the driving section PS' to supply or cut off a switch drive power source Vsw' due to receiving a command from the remote controller.

The first switching section 51' is for switching the flow of a current to the main circuit 80a and is connected in series with the main circuit 80a between the commercial power source 70 and the main circuit 80a as described above. In addition, the second switching section 52' is for switching the flow of a current to the auxiliary circuit 80b and is connected in series with the auxiliary circuit 80b between the commercial power source 70 and the auxiliary circuit 80b as described above. Due to the switching section 50' being provided in this manner, it is possible to cut off the supply of power to the main circuit 80a and the auxiliary circuit 80b in the direct current power apparatus 80.

The input of the first driving section PS1' is connected with the switch control section 90 and the first level shifter 85. In addition, the output of the first driving section PS1' is connected with the gate terminal of the first switch SW1'. The first driving section PS1' is supplied with the predetermined voltage V8 from the first level shifter 85. The first driving section PS1' generates a switch drive power source Vsw1' for the first switch SW1' according to a command from the switch control section 90. The first driving section PS1' outputs the switch drive power source Vsw1' to the first switch SW1'. That is, the operations of the first switch SW1' being turned ON and OFF is controlled by the switch control section 90.

In detail, the first driving section PS1' turns the first switch SW1' ON by supplying the switch drive power source Vsw1' which is, for example, 5V to the first switch SW1' so that the main circuit 80a and the main circuit installation device 801 is supplied with power from the commercial power source 70 and current flows in the main circuit 80a and the main circuit installation device 801. In addition, the first driving section PS1' turns the first switch SW1' OFF by interrupting the supply of the switch drive power source Vsw1' to the first switch SW1' so that the supply of power to the main circuit 80a and the main circuit installation device 801 is cut off and current doesn't flow in the main circuit 80a and the main circuit installation device 801.

The input of the second driving section PS2' is connected with the switch control section 90 and the second level shifter 87. The output of the second driving section PS2' is connected with the gate terminal of the second switch SW2'. The second driving section PS2' is supplied with the predetermined voltage V10 from the second level shifter 87. The second driving section PS2' generates a switch drive power source Vsw2' (the switch drive power sources Vsw1' and Vsw2' are described below in combination as a switch drive power source Vsw') for the second switch SW2' according to a command from the switch control section 90. The second driving section PS2'outputs the switch drive power source Vsw2' to the second switch SW2'. That is, the operations of the second switch SW2' being turned ON and OFF is controlled by the switch control section 90.

The second driving section PS2' turns the second switch SW2' ON by supplying the switch drive power source Vsw2' which is, for example, 5V to the second switch SW2' so that the auxiliary circuit 80b and the auxiliary circuit installation device 802 is supplied with power from the commercial power source 70 and current flows in the auxiliary circuit 80b and the auxiliary circuit installation device 802. In addition, the second driving section PS2' turns the second switch SW2' OFF by interrupting the supply of the switch drive power source Vsw2' to the second switch SW2' so that the auxiliary circuit 80b and the auxiliary circuit installation device 802 is not supplied with power and current doesn't flow in the auxiliary circuit 80b and the auxiliary circuit installation device 802.

In detail, the switch control section 90 receives a main circuit installation device operation command being received from the remote controller and controls so that the first switch SW1' is turned ON and the second switch SW2' is turned OFF. Due to this, current flows in the main circuit 80a and the main circuit installation device 801 due to power being supplied to the main circuit 80a and the main circuit installation device 801, and current doesn't flow in the auxiliary circuit 80b and the auxiliary circuit installation device 802 due to the supply of power to the auxiliary circuit 80b and the auxiliary circuit installation device 802 being cut off. In addition, the switch control section 90 receives a main circuit installation device stop command being received from the remote controller and controls so that the first switch SW1' is turned OFF and the second switch SW2' is turned ON. Due to this, current doesn't flow in the main circuit 80a due to the supply of power to the main circuit 80a being cut off, and current flows in the auxiliary circuit 80b due to power being supplied to the auxiliary circuit 80b.

Here, the switch control section 90 is supplied with power from the first level shifter 85 when the main circuit installation device 801 is being operated and is supplied with power from the second level shifter 87 when operation of the main circuit installation device 801 is stopped. That is, the switch control section 90 is always supplied with power. Due to this, it is possible for the switch control section 90 to always perform control of switching of the switch SW'.

In the embodiment which is shown in Fig. 7, the first switch SW1' is connected in series with the main circuit 80a between the commercial power source 70 and the main circuit 80a and is configured so as to be able to cut off the supply of power from the commercial power source 70 to the main circuit 80a. The switch control section 90 is supplied with power by being electrically connected with the first level shifter 85 and the second level shifter 87, and controls switching of the first switch SW1'. Due to this, according to the circumstances, it is possible to supply power only to one circuit either of the main circuit 80a or the auxiliary circuit 80b by the supply of power to the other out of the main circuit 80a or the auxiliary circuit 80b being cut off. For this reason, it is possible to supply power to the main circuit 80a and to cut off the supply of power to the auxiliary circuit 80b in a case where it is necessary for power to be supplied to the main circuit 80a. Also, it is possible to cut off the supply of power to the main circuit 80a and to supply power to the auxiliary circuit 80b in a case where it is not necessary for power to be supplied to the main circuit 80a. As a result, power consumption is reduced in a case where it is not necessary for power to be supplied to the main circuit 80a. Accordingly, it is possible to reduce power consumption in the direct current power apparatus 80.

### INDUSTRIAL APPLICABILITY

It is possible for the present invention to be utilized in an apparatus which has a circuit where power is supplied from an external power source and it is possible for the present invention to be utilized in actuator driving apparatuses, direct current power apparatuses, and the like in, for example, air conditioners.

### REFERENCE SIGNS LIST

- 10: AIR CONDITIONER
- M22: INDOOR FAN MOTOR
- 30: MOTOR DRIVING APPARATUS
- 30a, 80a: MAIN CIRCUIT
- 30b, 80b: AUXILIARY CIRCUIT
- 301: MAIN CIRCUIT INSTALLATION DEVICE
- 302: AUXILIARY CIRCUIT INSTALLATION DEVICE
- 31, 82: FIRST DIRECT CURRENT VOLTAGE GENERATING SECTION
- 34: VOLTAGE DETECTING SECTION
- 35: CURRENT DETECTING SECTION
- 36: DRIVE VOLTAGE GENERATING SECTION
- 37: INVERTER
- 38: INDOOR FAN CONTROL SECTION
- 39: GATE DRIVING SECTION
- 40: SENSORLESS CONTROL SECTION
- 41, 85: FIRST LEVEL SHIFTER
- 42, 86: SECOND DIRECT CURRENT VOLTAGE GENERATING SECTION
- 43, 87: SECOND LEVEL SHIFTER
- 51, 51': FIRST SWITCHING SECTION
- 52, 52': SECOND SWITCHING SECTION
- 60: INTEGRAL CONTROL SECTION
- 70: COMMERCIAL POWER SOURCE
- 80: DIRECT CURRENT POWER APPARATUS
- 81: REACTOR
- 83: VOLTAGE PHASE DETECTING SECTION
- 84: THIRD SWITCH CONTROL SECTION
- 90: SWITCH CONTROL SECTION
- 100: LOAD
- SW1, SW1': FIRST SWITCH
- SW2, SW2': SECOND SWITCH
- SW3: THIRD SWITCH
- PS1, PS1': FIRST DRIVING SECTION
- PS2, PS2': SECOND DRIVING SECTION

### CITATION LIST

### <Patent Literature>

Patent Document 1: JP 2012-244869 A

## Claims

1. A power consumption reducing apparatus (30, 80), which is provided in an indoor unit (21) and/or an outdoor unit (11) of an air conditioner (10), comprising:
a main circuit (30a, 80a) configured to be electrically connected with an external power source (70) to be supplied with power from the external power source, and including a main power source (41, 85) and a first direct current voltage generating section (31);
an auxiliary circuit (30b, 80b) configured to be electrically connected with the external power source to be supplied with power from the external power source, and including an auxiliary power source (43, 87);
a first switch section (51, 51') connected in series with the main circuit between the external power source and the main circuit, and configured to be able to cut off the supply of power from the external power source to the main circuit; and
a switch control section (60, 90) configured to be electrically connected with the auxiliary power source to be supplied with power from the auxiliary power source, and control switching of the first switch section,
wherein,
the main circuit is provided with a main circuit installation device (301, 801) configured to be operated by power which is supplied from the first direct current voltage generating section (31) or the main power source, and
the switch control section is configured to switch the first switch section so that power is supplied to the main circuit during an operation mode where the main circuit installation device is being operated and so that the supply of power to the main circuit is cut off during a standby mode where operation of the main circuit installation device is stopped;
**characterized in that**
the main circuit installation device includes
a voltage detecting section (34) configured to detect a voltage which is supplied from the external power source, and
a drive signal generating section (36) configured to generate a drive signal (SU, SV, SW) for driving an actuator (M22) based on the detection results from the voltage detecting section,
the actuator is a motor (M22) which is at least one drive source for a plurality of devices included in an air conditioner (10),
the drive signal generating section (36) includes
a determining section (38) configured to perform control to determine the drive signal using the detection results from the voltage detecting section, and
an output section (37) configured to generate the drive signal determined by the determining section and outputs the drive signal to the actuator.

2. The power consumption reducing apparatus according to claim 1, wherein
the auxiliary circuit (30b, 80b) further includes a second direct current voltage generating section (42).

3. A power consumption reducing apparatus (30, 80) comprising:
a main circuit (30a, 80a) configured to be electrically connected with an external power source (70) to be supplied with power from the external power source, and including a main power source (41, 85);
an auxiliary circuit (30b, 80b) configured to be electrically connected with the external power source to be supplied with power from the external power source, and including an auxiliary power source (43, 87);
a first switch section (51, 51') connected in series with the main circuit between the external power source and the main circuit, and configured to be able to cut off the supply of power from the external power source to the main circuit;
a second switch section (52, 52') connected in series with the auxiliary circuit between the external power source and the auxiliary circuit and configured to be able to cut off the supply of power from the external power source to the auxiliary circuit, and
a switch control section (60, 90) configured to be electrically connected with the main power source and the auxiliary power source to be supplied with power from the main power source and the auxiliary power source, and control switching of the first switch section and the second switch section,
wherein
the main circuit is provided with a main circuit installation device (301, 801) configured to be operated by power which is supplied from the external power source or the main power source, and
the switch control section is configured to switch the first switch section so that power is supplied to the main circuit during an operation mode where the main circuit installation device is being operated and so that the supply of power to the main circuit is cut off during a standby mode where operation of the main circuit installation device is stopped,
the switch control section is configured to switch the second switch section so that the supply of power to the auxiliary circuit is cut off during the operation mode and so that power is supplied to the auxiliary circuit during the standby mode.

4. The power consumption reducing apparatus according to claim 3, wherein
the auxiliary circuit is provided with an auxiliary circuit installation device (302, 802),
the auxiliary circuit installation device (302, 802) being configured to be operated by power that is supplied from the external power source via the second switch section or power that is supplied from the auxiliary power source, and be able to be electrically connected with the external power source via the first switch section or with the main power source to be supplied with power from the external power source or the main power source, and
the auxiliary circuit installation device is configured to be supplied with power from the external power source via the first switch section or from the main power source during the operation mode to be supplied with power from the external power source via the second switch section or from the auxiliary power source during the standby mode.

5. The power consumption reducing apparatus according to any one of claims 3 to 4, wherein
the standby mode state is realized when a predetermined time period elapses since operation of the main circuit installation device is stopped.

6. The power consumption reducing apparatus according to any one of claims 3 to 5, further comprising
an integral control section (60) which is configured to integrally control a plurality of devices included in the air conditioner (10),
wherein
the main circuit installation device is a device which is included in the air conditioner (10), and
the switch control section is included in the integral control section.

7. The power consumption reducing apparatus according to any one of claims 3 to 6, wherein
the main circuit installation device includes
a voltage detecting section (34) configured to detect a voltage which is supplied from the external power source, and
a detection results utilizing section (36) configured to be operated based on the detection results from the voltage detecting section.

8. The power consumption reducing apparatus according to any one of claims 3 to 6, wherein
the main circuit installation device includes
a voltage detecting section (34) configured to detect a voltage which is supplied from the external power source, and
a drive signal generating section (36) configured to generate a drive signal (SU, SV, SW) for driving an actuator (M22) based on the detection results from the voltage detecting section.

9. The power consumption reducing apparatus according to claim 8, wherein
the actuator is a motor (M22) which is at least one drive source for a plurality of devices included in an air conditioner (10), and
the drive signal generating section (36) includes
a determining section (38) configured to perform control to determine the drive signal using the detection results from the voltage detecting section, and
an output section (37) configured to generate the drive signal determined by the determining section and output the drive signal to the actuator.

## Patentansprüche

1. Vorrichtung zur Reduzierung des Stromverbrauchs (30, 80), die in einer Inneneinheit (21) und/oder einer Außeneinheit (11) einer Klimaanlage (10) vorgesehen ist, mit:
einer Hauptschaltung (30a, 80a), die konfiguriert ist, mit einer externen Stromquelle (70) elektrisch verbunden zu werden, um mit Strom aus der externen Stromquelle versorgt zu werden, und eine Hauptstromquelle (41, 85) und einen ersten Gleichspannungserzeugungsabschnitt (31) umfasst;
einer Hilfsschaltung (30b, 80b), die konfiguriert ist, mit der externen Stromquelle elektrisch verbunden zu werden, um mit Strom aus der externen Stromquelle versorgt zu werden, und eine Hilfsstromquelle (43, 87) umfasst;
einem ersten Schalterabschnitt (51, 51'), der in Reihe mit der Hauptschaltung zwischen die externe Stromquelle und die Hauptschaltung geschaltet ist und der konfiguriert ist, imstande zu sein, die Versorgung mit Strom aus der externen Stromquelle zur Hauptschaltung abzuschalten; und
einen Schaltersteuerabschnitt (60, 90), der konfiguriert ist, mit der Hilfsstromquelle elektrisch verbunden zu werden, um mit Strom aus der Hilfsstromquelle versorgt zu werden, und das Schalten des ersten Schalterabschnitts zu steuern,
wobei,
die Hauptschaltung mit einer Hauptschaltungsinstallationsvorrichtung (301, 801) versehen ist, die konfiguriert ist, durch Strom betrieben zu werden, der vom ersten Gleichspannungserzeugungsabschnitt (31) oder von der Hauptstromquelle geliefert wird, und
der Schaltersteuerabschnitt konfiguriert ist, den ersten Schalterabschnitt so zu schalten, dass während einer Betriebsart, in der die Hauptschaltungsinstallationsvorrichtung betrieben wird, Strom an die Hauptschaltung geliefert wird, und so, dass während einer Bereitschaftsbetriebsart, in der der Betrieb der Hauptschaltungsinstallationsvorrichtung gestoppt ist, die Versorgung von Strom an die Hauptschaltung abgeschaltet wird;
**dadurch gekennzeichnet, dass**
die Hauptschaltungsinstallationsvorrichtung aufweist:
einen Spannungsermittlungsabschnitt (34), der konfiguriert ist, eine Spannung zu ermitteln, die von der externen Stromquelle geliefert wird, und
einen Ansteuerungssignalerzeugungsabschnitt (36), der konfiguriert ist, ein Ansteuerungssignal (SU, SV, SW) zum Ansteuern eines Stellglieds (M22) beruhend auf den Ermittlungsergebnissen aus dem Spannungsermittlungsabschnitt zu erzeugen,
das Stellglied ein Motor (M22) ist, der mindestens eine Antriebsquelle für eine Vielzahl von Vorrichtungen ist, die in einer Klimaanlage (10) enthalten sind,
der Ansteuerungssignalerzeugungsabschnitt (36) umfasst:
einen Festlegungsabschnitt (38), der konfiguriert ist, eine Steuerung durchzuführen, um das Ansteuerungssignal unter Verwendung der Ermittlungsergebnisse aus dem Spannungsermittlungsabschnitt festzulegen, und
einen Ausgangsabschnitt (37), der konfiguriert ist, das durch den Festlegungsabschnitt festgelegte Ansteuerungssignal zu erzeugen, und das Ansteuerungssignal an das Stellglied auszugeben.

2. Vorrichtung zur Reduzierung des Stromverbrauchs nach Anspruch 1, wobei
die Hilfsschaltung (30b, 80b) ferner einen zweiten Gleichspannungserzeugungsabschnitt (42) umfasst.

3. Vorrichtung zur Reduzierung des Stromverbrauchs (30, 80), die aufweist:
eine Hauptschaltung (30a, 80a), die konfiguriert ist, mit einer externen Stromquelle (70) elektrisch verbunden zu werden, um mit Strom aus der externen Stromquelle versorgt zu werden, und eine Hauptstromquelle (41, 85) umfasst;
eine Hilfsschaltung (30b, 80b), die konfiguriert ist, mit der externen Stromquelle elektrisch verbunden zu werden, um mit Strom aus der externen Stromquelle versorgt zu werden, und eine Hilfsstromquelle (43, 87) umfasst;
einen ersten Schalterabschnitt (51, 51'), der in Reihe mit der Hauptschaltung zwischen der externen Stromquelle und der Hauptschaltung geschaltet ist und der konfiguriert ist, imstande zu sein, die Versorgung mit Strom aus der externen Stromquelle zur Hauptschaltung abzuschalten;
einen zweiten Schalterabschnitt (52, 52'), der in Reihe mit der Hilfsschaltung zwischen der externen Stromquelle und der Hilfsschaltung geschaltet ist und der konfiguriert ist, imstande zu sein, die Versorgung mit Strom aus der externen Stromquelle zur Hilfsschaltung abzuschalten, und einen Schaltersteuerabschnitt (60, 90), der konfiguriert ist, mit der Hauptstromquelle und der Hilfsstromquelle elektrisch verbunden zu werden, um mit Strom aus der Hauptstromquelle und der Hilfsstromquelle versorgt zu werden, und das Schalten des ersten Schalterabschnitts und des zweiten Schalterabschnitts zu steuern,
wobei
die Hauptschaltung mit einer Hauptschaltungsinstallationsvorrichtung (301, 801) versehen ist, die konfiguriert ist, durch Strom betrieben zu werden, der aus der externen Stromquelle oder der Hauptstromquelle geliefert wird, und
der Schaltersteuerabschnitt konfiguriert ist, den ersten Schalterabschnitt so zu schalten, dass während einer Betriebsart, in der die Hauptschaltungsinstallationsvorrichtung betrieben wird, Strom an die Hauptschaltung geliefert wird, und so, dass während einer Bereitschaftsbetriebsart, in der der Betrieb der Hauptschaltungsinstallationsvorrichtung gestoppt ist, die Versorgung von Strom an die Hauptschaltung abgeschaltet wird,
der Schaltersteuerabschnitt konfiguriert ist, den zweiten Schalterabschnitt so zu schalten, dass während der Betriebsart die Versorgung von Strom an die Hilfsschaltung abgeschaltet wird, und so, dass während der Bereitschaftsbetriebsart Strom an die Hilfsschaltung geliefert wird.

4. Vorrichtung zur Reduzierung des Stromverbrauchs nach Anspruch 3, wobei
die Hilfsschaltung mit einer Hilfsschaltungsinstallationsvorrichtung (302, 802) versehen ist,
die Hilfsschaltungsinstallationsvorrichtung (302, 802) konfiguriert ist, durch Strom, der aus der externen Stromquelle über den zweiten Schalterabschnitt geliefert wird, oder durch Strom betrieben zu werden, der aus der Hilfsstromquelle geliefert wird, und imstande zu sein, mit der externen Stromquelle über den ersten Schalterabschnitt oder mit der Hauptstromquelle elektrisch verbunden zu werden, um mit Strom aus der externen Stromquelle oder der Hauptstromquelle versorgt zu werden, und
die Hilfsschaltungsinstallationsvorrichtung konfiguriert ist, mit Strom aus der externen Stromquelle über den ersten Schalterabschnitt oder aus der Hauptstromquelle während der Betriebsart versorgt zu werden, um mit Strom aus der externen Stromquelle über den zweiten Schalterabschnitt oder aus der Hilfsstromquelle während der Bereitschaftsbetriebsart versorgt zu werden.

5. Vorrichtung zur Reduzierung des Stromverbrauchs nach einem der Ansprüche 3 bis 4, wobei
der Bereitschaftsbetriebsartzustand verwirklicht wird, wenn eine vorgegebene Zeitspanne verstreicht, nachdem der Betrieb der Hauptschaltungsinstallationsvorrichtung gestoppt wird.

6. Vorrichtung zur Reduzierung des Stromverbrauchs nach einem der Ansprüche 3 bis 5, die ferner aufweist
einen integralen Steuerabschnitt (60), der konfiguriert ist, integral eine Vielzahl von Vorrichtungen zu steuern, die in der Klimaanlage (10) enthalten sind,
wobei
die Hauptschaltungsinstallationsvorrichtung eine Vorrichtung ist, die in der Klimaanlage (10) enthalten ist, und
der Schaltersteuerabschnitt im integralen Steuerabschnitt enthalten ist.

7. Vorrichtung zur Reduzierung des Stromverbrauchs nach einem der Ansprüche 3 bis 6, wobei
die Hauptschaltungsinstallationsvorrichtung umfasst:
einen Spannungsermittlungsabschnitt (34), der konfiguriert ist, eine Spannung zu ermitteln, die aus der externen Stromquelle geliefert wird, und
einen Ermittlungsergebnis-Nutzungsabschnitt (36), der konfiguriert ist, beruhend auf den Ermittlungsergebnissen aus dem Spannungsermittlungsabschnitt betrieben zu werden.

8. Vorrichtung zur Reduzierung des Stromverbrauchs nach einem der Ansprüche 3 bis 6, wobei
die Hauptschaltungsinstallationsvorrichtung umfasst:
einen Spannungsermittlungsabschnitt (34), der konfiguriert ist, eine Spannung zu ermitteln, die aus der externen Stromquelle geliefert wird, und
einen Ansteuerungssignalerzeugungsabschnitt (36), der konfiguriert ist, ein Ansteuerungssignal (SU, SV, SW) zum Ansteuern eines Stellglieds (M22) beruhend auf den Ermittlungsergebnissen aus dem Spannungsermittlungsabschnitt zu erzeugen.

9. Vorrichtung zur Reduzierung des Stromverbrauchs nach Anspruch 8, wobei
das Stellglied ein Motor (M22) ist, der mindestens eine Antriebsquelle für eine Vielzahl von Vorrichtungen ist, die in einer Klimaanlage (10) enthalten sind, und
der Ansteuerungssignalerzeugungsabschnitt (36) umfasst:
einen Festlegungsabschnitt (38), der konfiguriert ist, eine Steuerung durchzuführen, um das Ansteuerungssignal unter Verwendung der Ermittlungsergebnisse aus dem Spannungsermittlungsabschnitt festzulegen, und
einen Ausgangsabschnitt (37), der konfiguriert ist, das durch den Festlegungsabschnitt festgelegte Ansteuerungssignal zu erzeugen, und das Ansteuerungssignal an das Stellglied auszugeben.

## Revendications

1. Dispositif de réduction de consommation d'énergie (30, 80), logé dans une unité intérieure (21) et/ou une unité extérieure (11) d'un climatiseur (10), comprenant :
un circuit principal (30a, 80a) prévu pour être électriquement relié à une source de courant externe (70) pour être alimenté en courant par la source de courant externe, et comportant une source de courant principale (41, 85) et une première section génératrice (31) de tension continue ;
un circuit auxiliaire (30b, 80b) prévu pour être électriquement relié à la source de courant externe pour être alimenté en courant par la source de courant externe, et comportant une source de courant auxiliaire (43, 87) ;
une première section de commutation (51, 51') connectée en série au circuit principal entre la source de courant externe et le circuit principal, et prévue pour permettre la coupure de l'alimentation en courant de la source de courant externe vers le circuit principal ; et
une section de commande de commutation (60, 90) prévue pour être électriquement reliée à la source de courant auxiliaire pour être alimentée en courant par la source de courant auxiliaire, et commander la commutation de la première section de commutation,
où
le circuit principal est pourvu d'un dispositif d'installation (301, 801) de circuit principal prévu pour être activé par le courant reçu de la première section génératrice (31) de tension continue ou de la source de courant principale, et
la section de commande de commutation est prévue pour commuter la première section de commutation de manière à alimenter le circuit principal en courant pendant un mode de fonctionnement où le dispositif d'installation de circuit principal est activé, l'alimentation en courant du circuit principal étant ainsi coupée pendant un mode de veille où le fonctionnement du dispositif d'installation de circuit principal est désactivé ;
**caractérisé en ce que**
le dispositif d'installation de circuit principal comprend une section de détection de tension (34) prévue pour détecter une tension reçue de la source de courant externe, et
une section de génération (36) de signal d'entraînement prévue pour générer un signal d'entraînement (SU, SV, SW) destiné à entraîner un actionneur (M22) sur la base des résultats de détection de la section de détection de tension,
l'actionneur est un moteur (M22), lequel est au moins une source d'entraînement pour une pluralité de dispositifs compris dans un climatiseur (10),
la section de génération (36) de signal d'entraînement comprend
une section de détermination (38) prévue pour exécuter une commande de détermination du signal d'entraînement au moyen des résultats de détection de la section de détection de tension, et
une section de sortie (37) prévue pour générer le signal d'entraînement déterminé par la section de détermination et transmettre le signal d'entraînement à l'actionneur.

2. Dispositif de réduction de consommation d'énergie selon la revendication 1, où
le circuit auxiliaire (30b, 80b) comporte en outre une deuxième section génératrice (42) de tension continue.

3. Dispositif de réduction de consommation d'énergie (30, 80) comprenant :
un circuit principal (30a, 80a) prévu pour être électriquement relié à une source de courant externe (70) pour être alimenté en courant par la source de courant externe, et comportant une source de courant principale (41, 85) ;
un circuit auxiliaire (30b, 80b) prévu pour être électriquement relié à la source de courant externe pour être alimenté en courant par la source de courant externe, et comportant une source de courant auxiliaire (43, 87) ;
une première section de commutation (51, 51') connectée en série au circuit principal entre la source de courant externe et le circuit principal, et prévue pour permettre la coupure de l'alimentation en courant de la source de courant externe vers le circuit principal ;
une deuxième section de commutation (52, 52') connectée en série au circuit auxiliaire entre la source de courant externe et le circuit auxiliaire et prévue pour permettre la coupure de l'alimentation en courant de la source de courant externe vers le circuit auxiliaire, et
une section de commande de commutation (60, 90) prévue pour être électriquement reliée à la source de courant principale et à la source de courant auxiliaire pour être alimentée en courant par la source de courant principale et la source de courant auxiliaire, et commander la commutation de la première section de commutation et de la deuxième section de commutation,
où
le circuit principal est pourvu d'un dispositif d'installation (301, 801) de circuit principal prévu pour activé par le courant reçu de la source de courant externe ou de la source de courant principale, et
la section de commande de commutation est prévue pour commuter la première section de commutation de manière à alimenter le circuit principal en courant pendant un mode de fonctionnement où le dispositif d'installation de circuit principal est activé, l'alimentation en courant du circuit principal étant ainsi coupée pendant un mode de veille où le fonctionnement du dispositif d'installation de circuit principal est désactivé,
la section de commande de commutation est prévue pour commuter la deuxième section de commutation de manière à couper l'alimentation en courant du circuit auxiliaire pendant le mode de fonctionnement, le circuit auxiliaire étant ainsi alimenté en courant pendant le mode de veille.

4. Dispositif de réduction de consommation d'énergie selon la revendication 3, où
le circuit auxiliaire est pourvu d'un dispositif d'installation (302, 802) de circuit auxiliaire,
ledit dispositif d'installation (302, 802) de circuit auxiliaire étant prévu pour être activé par le courant reçu de la source de courant externe via la deuxième section de commutation ou par le courant reçu de la source de courant auxiliaire, et pour pouvoir être électriquement relié à la source de courant externe via la première section de commutation ou à la source de courant principale, pour être alimenté en courant par la source de courant externe ou par la source de courant principale, et
le dispositif d'installation de circuit auxiliaire est prévu pour être alimenté en courant par la source de courant externe via la première section de commutation ou par la source de courant principale pendant le mode de fonctionnement, et pour être alimenté en courant par la source de courant externe via la deuxième section de commutation ou par la source de courant auxiliaire pendant le mode de veille.

5. Dispositif de réduction de consommation d'énergie selon la revendication 3 ou la revendication 4, où
le mode de veille est réalisé après écoulement d'une durée prédéfinie depuis la désactivation du dispositif d'installation de circuit principal.

6. Dispositif de réduction de consommation d'énergie selon l'une des revendications 3 à 5, comprenant en outre une section de commande intégrée (60) prévue pour commander de manière intégrée une pluralité de dispositifs compris dans le climatiseur (10),
où
le dispositif d'installation de circuit principal est un dispositif compris dans le climatiseur (10), et
la section de commande de commutation est comprise dans la section de commande intégrée.

7. Dispositif de réduction de consommation d'énergie selon l'une des revendications 3 à 6, où
le dispositif d'installation de circuit principal comprend une section de détection de tension (34) prévue pour détecter une tension reçue de la source de courant externe,
et
une section d'exploitation (36) de résultats de détection prévue pour être activée sur la base des résultats de détection de la section de détection de tension.

8. Dispositif de réduction de consommation d'énergie selon l'une des revendications 3 à 6, où
le dispositif d'installation de circuit principal comprend une section de détection de tension (34) prévue pour détecter une tension reçue de la source de courant externe, et
une section de génération (36) de signal d'entraînement prévue pour générer un signal d'entraînement (SU, SV, SW) destiné à entraîner un actionneur (M22) sur la base des résultats de détection de la section de détection de tension.

9. Dispositif de réduction de consommation d'énergie selon la revendication 8, où
l'actionneur est un moteur (M22), lequel est au moins une source d'entraînement pour une pluralité de dispositifs compris dans un climatiseur (10), et
la section de génération (36) de signal d'entraînement comprend
une section de détermination (38) prévue pour exécuter une commande de détermination du signal d'entraînement au moyen des résultats de détection de la section de détection de tension, et
une section de sortie (37) prévue pour générer le signal d'entraînement déterminé par la section de détermination et transmettre le signal d'entraînement à l'actionneur.
